# EUROPÄISCHE PATENTSCHRIFT

(11) **EP 3 017 521 B1**
(45) Veröffentlichungstag und Bekanntmachung des Hinweises auf die Patenterteilung: **02.10.2019**
(21) Anmeldenummer: 14734481.6
(22) Anmeldetag: 01.07.2014
(51) Int. Cl.: H02J 7/00

(54) **VORRICHTUNG UND VERFAHREN ZUM LADUNGSAUSGLEICH EINER ENERGIESPEICHERANORDNUNG**
DEVICE AND METHOD FOR CHARGE EQUALIZATION OF AN ENERGY ACCUMULATOR ARRANGEMENT
DISPOSITIF ET PROCÉDÉ PERMETTANT D'ÉQUILIBRER LA CHARGE D'UN ENSEMBLE D'ACCUMULATION D'ÉNERGIE

(30) Priorität: 01.07.2013 DE 102013106872
(43) Veröffentlichungstag der Anmeldung: 11.05.2016
(73) Patentinhaber: H-Tech AG, 9494 Schaan (LI)
(72) Erfinder: SAMUEL, Canadi, 72574 Bad Urach (DE)
(74) Vertreter: Ter Meer Steinmeister & Partner
(86) Internationale Anmeldenummer: PCT/EP2014/063978
(87) Internationale Veröffentlichungsnummer: WO 2015/000907

(56) Entgegenhaltungen:
- WO-A2-2004/049540
- JP-A- 2005 198 453
- US-A1- 2010 295 510
- US-A1- 2012 049 801

## Beschreibung

Die Erfindung betrifft eine Vorrichtung zum Ladungsausgleich einer Energiespeicheranordnung und ein Verfahren zum Ladungsausgleich von Speichermodulen einer Energiesparanordnung.

Bei Energiespeichern werden zunehmend Lithium-Ionen-Akkus eingesetzt, insbesondere für Elektro- und Hybridfahrzeuge, aber auch in vielen anderen Bereichen, z.B. tragbare elektronische Geräte. Der Vorteil von Lithium-Ionen-Akkus ist die besonders hohe Energiedichte bei gleichzeitig geringem Volumen und Gewicht. Ein Nachteil von Lithium-Ionen-Akkus ist jedoch, dass diese sehr empfindlich gegen Überladung sind, so dass nur mit entsprechenden Schutzschaltungen ein Betrieb innerhalb der vorgeschriebenen Toleranzgrenzen und somit eine lange Lebensdauer der Lithium-Ionen-Akkus gewährleistet werden kann. Lithium-Ionen Akkus werden im Folgenden auch als Lithium-Ionen-Zellen bezeichnet.

Bei herkömmlichen Akkus, beispielsweise NiCd- oder NiMh-Akkus sind derartige Schutzschaltungen nicht erforderlich, da diese Akkus sehr robust sind. Im Gegensatz dazu ist der Lithium-Ionen-Akku bereits bei einer geringfügigen Überladung langfristig geschädigt. Das Gleiche gilt für eine Tiefentladung von Lithium-Ionen-Zellen, die eine nachhaltige Zerstörung der Zelle nach sich ziehen. Daher müssen die Zellen von Lithium-Ionen-Akkus regelmäßig überwacht werden, um einen reibungsfreien und sicheren Betrieb zu gewährleisten. Dazu werden Batteriemanagementsysteme eingesetzt, die dafür sorgen, dass die einzelnen Zellen nicht überladen werden und auch nicht zu stark entladen werden.

Zusätzlich zu den Funktionen von Batteriemanagementsystemen ist jedoch auch ein Ladungsausgleich zwischen den einzelnen Zellen erforderlich, wozu ein Balancer verwendet wird, der auch als Entladungsausgleichschaltung bzw. Ausgleichsregler bekannt ist, und dafür sorgt, dass die einzelnen Zellen optimal geladen/entladen werden und somit einen Schutz gegen Überladung und zu starker Entladung gewährleisten.

Energiespeicheranordnungen bei Elektro- und Hybridfahrzeugen, aber auch bei anderen batteriebetriebenen Vorrichtungen, sind üblicherweise aus einer Reihenschaltung aus mehreren Speichermodulen zusammengesetzt, wobei ein Speichermodul mehrere Zellen aufweisen kann. Die Zellen sind üblicherweise in sogenannten Akkupacks bzw. Sheets verbaut, wobei die einzelnen Zellen innerhalb dieser Sheets nur bedingt einzeln überwacht werden können. Innerhalb der Akkupacks bzw. Sheets sind die Zellen in Reihe und/oder parallel verschaltet. Da jedoch mehrere Sheets oder Akkupacks in Reihe geschaltet werden, lässt sich eine Überwachung der Speichermodule bzw. Sheets gewährleisten. Die einzelnen Ackupacks bzw. Speichermodule weisen dazu separate Anschlüsse auf, die ein Überprüfen der Spannung und ein individuelles Laden bzw. Entladen der in diesem Speichermodul befindlichen Zellen ermöglichen. Während eines Lade- bzw. Entladevorgangs wird die Spannung von der Vorrichtung zum Ladungsausgleich an den Anschlüssen der einzelnen Speichermodule überwacht.

Konventionell haben sich beim erforderlichen Ladungsausgleich für Lithium-Ionen-Zellen zwei unterschiedliche Methoden etabliert. Beim Ladungsausgleich wird insbesondere überwacht, ob eines der Speichermodule während des Ladevorgangs seine Ladeschlussspannung erreicht bzw. beim Entladevorgang seine Entladeschlussspannung erreicht. Da mehrere in Reihe geschaltete Speichermodule nicht die gleichen Parameter aufweisen, jedoch mit einem gemeinsamen Ladestrom geladen werden, stellt sich zwangsläufig ein unterschiedlicher Ladezustand in den einzelnen Speichermodulen ein, d.h. es wird in der Reihenschaltung von Speichermodulen Speichermodule geben, die schneller ihre Ladeschlussspannung erreichen, als andere Speichermodule in der Reihenschaltung. Dies hat den Nachteil, dass der Ladevorgang unterbrochen wird, sobald eines der Speichermodule seine Ladeschlussspannung erreicht hat. Das gleiche gilt für den Entladevorgang, der unterbrochen wird, sobald eines der Speichermodule seine Entladeschlussspannung erreicht hat. Da jedoch beim Ladevorgang noch nicht alle Speichermodule voll geladen sind, wäre es vorteilhaft, das bereits vollgeladene Speichermodul beispielsweise zu entladen, um somit den Ladevorgang weiter fortführen zu können und auch die anderen verbleibenden Speichermodule voll laden zu können. Dazu muss die Ladung in dem betreffenden Speichermodul mit erreichter Ladeschlussspannung entfernt werden, was bei herkömmlichen Vorrichtungen zum Ladungsausgleich beispielsweise mittels Widerständen vorgenommen wird, bei denen die überschüssige Ladung über den Widerstand in Wärme umgewandelt wird. Auf diese Art und Weise wird Energie nicht effizient genutzt. Auch während des Entladevorgangs ist ein Ladungsausgleich sehr sinnvoll, da sonst der Entladevorgang abgeschaltet wird, sobald eines der Speichermodule seine Entladeschlussspannung erreicht, obwohl in den anderen Speichermodulen noch Ladung vorhanden ist, die dem Benutzer zur Verfügung gestellt werden sollte. Ohne Ladungsausgleich wird sowohl der Ladevorgang als auch der Entladevorgang immer vom Zustand der schwächsten Zelle bestimmt, wodurch entweder Energie verschwendet wird oder vorhandene Energie nicht sinnvoll nutzbar gemacht wird.

JP 2005 198 453 A offenbart eine Ladevorrichtung für in Serie geschaltete Doppelschichtkondensatoren.

US 2010/0295510 A1 offenbart eine Ladeeinrichtung zum Laden von in Serie geschalteten Batteriezellen mit einem Transformator mit einer an die Ladespannung angeschlossene Primärseite und einer Sekundärseite mit mehreren Abschnitten.

WO 2004/049540 offenbart ein System zum Ausgleichen eines Ladungszustands zwischen in Reihe geschalteten elektrischen Energiespeichereinheiten.

Aufgabe der Erfindung ist es deshalb eine Vorrichtung bzw. ein Verfahren zum Ladungsausgleich von Speichermodulen in einer Energiespeicheranordnung anzugeben, bei denen die Speicherkapazität der verwendeten Speichermodule mit einem geringen Schaltungsaufwand effizient eingesetzt wird.

Die Aufgabe wird durch den Gegenstand der unabhängigen Ansprüche gelöst. Vorteilhafte Ausgestaltungen und Weiterbildungen sind Gegenstand abhängiger Ansprüche.

Gemäß einem Aspekt ist eine Vorrichtung zum Ladungsausgleich einer Energiespeicheranordnung angegeben, wobei die Energiespeicheranordnung wenigstens zwei Speichermodule umfasst, die elektrisch in Reihe geschaltet sind. Die Vorrichtung zum Ladungsausgleich wird dabei an die Energiespeicheranordnung mit den Speichermodulen angeschlossen. Die Vorrichtung zum Ladungsausgleich umfasst eine Schaltvorrichtung, die an die Speichermodule der Energiespeicheranordnung angeschlossen ist. Weiter ist ein Gleichspannungswandler vorgesehen, der über die Schaltvorrichtung mit den Speichermodulen koppelbar ist. Eine Steuervorrichtung beispielsweise in Form eines Mikrocontrollers ist zur Überwachung von Parametern der Speichermodule und zur Steuerung der Schaltvorgänge und des Gleichstromwandlers vorgesehen. Während des Ladevorgangs der Energiespeicheranordnung wird eines der Speichermodule basierend auf einem Vergleich von gemessenen Parametern mit einem vorbestimmten Parameter über die Schaltvorrichtung mit dem Gleichspannungswandler gekoppelt. Dieses Speichermodul wird über diese Kopplung teilweise entladen, wobei die aus dem Speichermodul entnommene Ladung mittels des Gleichspannungswandlers der Reihenschaltung der Speichermodule an den Außenanschlüssen zugeführt wird.

Diese Schaltung hat somit den Vorteil, dass die Reihenschaltung der Speichermodule als Energiespeicher verwendet wird, ohne dass überschüssige Ladungsenergie in Widerständen in Wärme umgewandelt werden muss. Durch die Verwendung des gesamten Energiespei chers als Puffer sind auch keine zusätzlichen Komponenten zum Speichern von Energie erforderlich, die aus einzelnen Speichermodulen entnommen wird, um ein Fortsetzen des Ladevorgangs zu gewährleisten. Dadurch ist der Ladungsausgleich in seiner Umladefähigkeit nur auf die Gesamtkapazität der Energiespeicheranordnung beschränkt. Jede externe Speicherung von Energie wäre immer durch die Kapazität der externen Speichervorrichtung beschränkt. Gemäß der vorliegenden Erfindung ist diese Beschränkung nicht vorhanden. Darüber hinaus verzichtet die vorliegende Erfindung auch auf jegliche bewusste Entladung mittels Widerständen, um somit die in den Speichermodulen vorhandene Energie effizient zu nutzen. Dadurch lassen sich auch die zum externen Entladen erforderlichen Widerstände und Spulen etc. einsparen, wodurch zusätzliches Gewicht dieser Elemente gespart wird. Außerdem lässt sich eine geringere Baugröße erzielen, als bei einer herkömmlichen Vorrichtung, die eine externe Speicherkapazität zur Zwischenspeicherung oder Elemente benötigt, über die die überschüssige Ladung entladen wird.

In einer vorteilhaften Ausgestaltung wird somit beim Laden der Energiespeicheranordnung eine vorbestimmte Parameterschwelle der Speichermodule überwacht, so dass bei Überschreiten dieser Parameterschwelle das entsprechende Speichermodul mit der überschrittenen Parameterschwelle über die Schaltvorrichtung mit dem Gleichspannungswandler verbunden wird. Somit kann dieses Speichermodul wenigstens teilweise über den Gleichspannungswandler entladen werden.

Während des Entladevorgangs kann eines der Speichermodule ebenfalls über die Schaltvorrichtung mit dem Gleichspannungswandler gekoppelt werden, wobei diesem Speichermodul eine Ladung zugeführt wird, um den Ladezustand in diesem Speichermodul zu erhöhen. Dabei wird die Energie zum Aufladen dieses Speichermoduls aus der gesamten Energiespeicheranordnung entnommen, wobei dazu von den Außenanschlüssen über den Gleichspannungswandler eine Ladung entnommen wird und somit dem Speichermodul, welches einen tiefen Ladezustand erreicht hat, zugeführt wird.

Vorteilhafterweise wird beim Entladevorgang überwacht, ob eine vorbestimmte Parameterschwelle unterschritten wird, wobei dem Speichermodul mit der unterschrittenen Parameterschwelle über die Schaltvorrichtung und den Gleichspannungswandler eine Ladung zugeführt wird, die von den Außenanschlüssen der Reihenschaltung der Speichermodule entnommen wurde.

Vorzugsweise wird als wesentlicher Parameter zur Steuerung der Vorrichtung zum Ladungsausgleich der Kapazitätswert der einzelnen Speichermodule verwendet. Anders als bei der Spannungsüberwachung ergibt sich bei der Überwachung der Kapazitäten der Vorteil, dass die Kapazitäten der einzelnen Speichermodule in den einzelnen Lade- und Entladezyklen sich nicht schlagartig ändern, so dass bei einer entsprechenden Speicherung des zugeführten Stroms bzw. der Ladung über die Zeit eine Kapazität der einzelnen Speichermodule bekannt ist. Basierend auf den Kapazitätswerten der einzelnen Speichermodule kann dann die Vorrichtung zum Ladungsausgleich gesteuert werden.

Ein Speichermodul mit geringerer Speicherkapazität, bspw. aufgrund von defekten Zellen innerhalb des Speichermoduls, ist beim Laden üblicherweise wesentlich schneller voll, als Speichermodule mit größerer Speicherkapazität. Folglich ist dieses Speichermodul mit geringerer Speicherkapazität beim Ladevorgang häufiger zu entladen. Ohne diesen gesteuerten Entladevorgang würde der gesamte Ladevorgang der Speichermodule beendet werden und die vorhandene Speicherkapazität aller Speichermodule würde nicht genutzt werden, was bspw. bei Elektrofahrzeugen erheblichen Einfluss auf die Reichweite hat und somit unbedingt zu vermeiden ist.

Dazu wird bei der erfindungsgemäßen Vorrichtung zum Ladungsausgleich beim Laden aller Speichermodule nach Erreichen eines vorbestimmten Schwellwertes in einem Speichermodul, beispielsweise 50% oder 80% der vorbekannten Speicherkapazität, ein Entladevorgang für dieses Speichermodul gestartet, der dann zu einem gesteuerten Entladen dieses Speichermoduls führt, wobei die entnommene Ladung über den Gleichspannungswandler an den Außenanschlüssen der Reihenschaltung der Speichermodule wieder zugeführt wird.

Das Umladen der Energie bei Speichermodulen mit verschiedenen Kapazitäten kann jedoch auch kontinuierlich erfolgen. Da die verschiedenen Speicherkapazitäten der Speichermodule bereits vor Beginn des Ladevorgangs bekannt sind, kann unmittelbar ein angepasstes Entladen des oder der Speichermodule mit geringerer Kapazität vorgenommen werden.

Beim Entladen ergibt sich bei dem kapazitätsgesteuerten Ladungsausgleich die Situation, dass das Speichermodul mit der geringeren Speicherkapazität immer am schnellsten entladen ist. Um dies zu vermeiden, wird entweder nach Erreichen eines bestimmten Schwellwertes der Speicherkapazität bzw. kontinuierlich ein Umladen gestartet, bei dem das Speichermodul mit der geringsten Speicherkapazität mit Ladung aus den anderen Speichermodulen wieder aufgeladen wird, um somit ein schnelles Entladen des Speichermoduls mit der geringsten Speicherkapazität zu vermeiden. Dies hat den Vorteil, dass sowohl beim Ladeals auch beim Entladevorgang das Speichermodul mit der geringsten Speicherkapazität nicht in seine Grenzbereiche geführt wird, so dass eine irreversible Beschädigung des Speichermoduls mit der geringsten Speicherkapazität vermieden wird und die anderen Speichermodule weiter entladen werden können.

In einer vorteilhaften Ausgestaltung ist sowohl beim Laden als auch beim Entladen der Speichermodule der Schwellwert, bei dem der Lade- bzw. Entladevorgang des Speichermoduls mit der geringsten Speicherkapazität einsetzt, von der Speicherkapazität der anderen Speichermodule bzw. vom Ladezustand der anderen Speichermodule abhängig. D.h. wenn alle in Reihe geschalteten Speichermodule nahe der Entladeschlussspannung sind, kann ein Umladen von Ladung von den Speichermodulen mit höherer Kapazität in das Speichermodul mit geringerer Kapazität notwendig sein, wenn beispielsweise bei einem Elektrofahrzeug ein Weiterfahren unbedingt erforderlich ist, so dass dann sozusagen auf Reserve geschaltet werden kann, auch wenn dies grundsätzlich für die Lithium-Ionen-Akkus in den Speichermodulen nicht vorteilhaft ist.

In anderen Anwendungssituationen könnte ein Umladen ausbleiben, wobei der Benutzer dann aufgefordert werden würde, einen Ladevorgang der gesamten Energiespeicheranordnung durchzuführen.

In einer weiteren vorteilhaften Ausgestaltung kann jedoch alternativ zum oben erwähnten kapazitätsgesteuerten Ladungsausgleich der Ladungsausgleich auch spannungsgesteuert vorgenommen werden. Beim spannungsgesteuerten Ladungsausgleich wird das Speichermodul, welches beim Ladevorgang als erstes seine Ladeschlussspannung erreicht, über die Schaltvorrichtung mit dem Gleichspannungswandler verbunden, sodass die überschüssige Ladung aus diesem Speichermodul entladen werden kann und über den Gleichspannungswandler der Reihenschaltung der Speichermodule an den Außenanschlüssen wieder zugeführt werden kann, um die gesamte Energiespeicheranordnung zu laden. Gleiches gilt beim Entladevorgang, bei dem das Speichermodul, welches als erstes seine Entladeschlussspannung erreicht, über die Schaltvorrichtung mit dem Gleichspannungswandler verbunden wird, um diesem Speichermodul einen Ladestrom zuzuführen, der der gesamten Energiespeichervorrichtung an den Außenanschlüssen entnommen wird. Zur Überwachung der Speichermodule nimmt die Steuervorrichtung eine Spannungsmessung über den einzelnen Speichermodulen vor, als auch eine Strommessung in der Reihenschaltung der Speichermodule und/oder eine Strommessung in der Zuleitung zum Gleichspannungswandler.

Der Gleichspannungswandler ist vorteilhafterweise ein Gleichspannungswandler mit einer galvanischen Trennung, so dass zwischen einer ersten Seite und einer zweiten Seite keine elektrisch leitfähige Verbindung besteht. Darüber hinaus ist der Gleichspannungswandler bidirektional ausgelegt, d.h. er kann an seiner ersten Seite sowohl einen Strom aus den Zellen entnehmen, als auch einen Strom in diese Zellen hineinschieben. Das gleiche gilt für die zweite Seite, die während des Ladevorgangs einen Stromfluss in Richtung Reihenschaltung ermöglicht. Im Entladevorgang fließt ein Strom von der Reihenschaltung zu der zweiten Seite des Gleichspannungswandlers, der dann an der ersten Seite des Gleichspannungswandlers entsprechend dem
Speichermodul, welches geladen werden soll, wieder zugeführt wird.

Der Gleichspannungswandler nimmt dabei eine erforderliche Anpassung im Spannungsniveau vor und überwacht darüber hinaus auch die Stromhöhe, so dass dem zu ladenden bzw. zu entladenen Speichermodul jeweils der passende Strom mit der entsprechenden Spannung zugeführt wird, bzw. während des Ladevorgangs ein Strom mit einer entsprechenden Spannung an die Außenanschlüsse der Reihenschaltung ausgegeben wird. Der Gleichspannungswandler kennt die Strom-/Spannnungskennlinien der einzelnen Speichermodule bzw. der Reihenschaltung der Speichermodule und kann somit zum Entladen oder Laden die entsprechenden Strom und Spannungswerte an seinen Anschlüssen einstellen.

Der Gleichspannungswandler kann darüberhinaus von der Steuereinrichtung so gesteuert werden, dass das Laden entweder eines einzelnen bzw. auch von mehreren Speichermodulen während des Entladevorgangs mit einem vordefinierten Spannungs- und Stromprofil abläuft. Auch das Zuführen der aus einem oder mehreren Speichermodulen entnommen Ladung zu den Außenanschlüssen der Reihenschaltung kann mit einer vorprogrammierten U/I Kennlinie erfolgen.

Vorteilhafter Weise sind jedem Speichermodul der Reihenschaltung in der Schaltvorrichtung zwei Schalter zugeordnet, wobei der eine Schalter eine Verbindung mit einem ersten Anschluss der ersten Seite des Gleichspannungswandlers ermöglicht und der zweite Schalter der Schaltvorrichtung, der diesem Speichermodul zugeordnet ist, eine Verbindung mit dem anderen Anschluss der ersten Seite des Gleichspannungswandlers ermöglicht, d.h. das Speichermodul kann über die beiden Schalter mit den Anschlüssen des Gleichspannungswandlers gekoppelt werden, um Ladung zu entnehmen bzw. das Speichermodul über den Gleichspannungswandler zu laden.

Der Gleichspannungswandler ist darüber hinaus auch mit der Steuereinrichtung verbunden, um den Gleichspannungswandler entsprechend zu überwachen und zu programmieren, bzw. Werte aus diesem Gleichspannungswandler auszulesen und in der Steuereinrichtung zu verarbeiten.

Die Schaltvorrichtung umfasst zweimal so viele Schalter, wie Speichermodule. Diese Schalter lassen sich von der Steuereinrichtung einzeln steuern. Jeder Schalter lässt sich dazu separat von der Steuereinrichtung ansteuern und entsprechend öffnen bzw. schließen, um somit eine Verbindung des Speichermoduls mit dem einen oder anderen Anschluss des Gleichspannungswandlers zu ermöglichen. Die Steuereinrichtung weist darüber hinaus auch einen Anschluss für das Empfangen von externen Steuersignalen auf. Über diesen bidirektionalen bzw. einen separaten Anschluss können auch Daten bzw. Signale an externe Geräte ausgegeben werden. Die Steuereinrichtung ist neben diesen Anschlüssen auch noch mit einem Anschluss versehen, der vorzugsweise permanent die Spannungswerte der einzelnen Speichermodule erfasst. Dazu können in der Steuereinrichtung mehrere AD-Wandler vorgesehen sein, die somit die Spannungsmessung an den einzelnen Speichermodulen vornehmen. Zur Überwachung der Stromwerte, sowohl in der Reihenschaltung der Speichermodule als auch in der Zuleitung zum Gleichspannungswandler, sind zusätzliche Amperemeter angeschlossen, die mit der Steuereinrichtung verbunden sind und somit die gemessenen Stromwerte an die Steuereinrichtung übermitteln können.

In einer vorteilhaften Ausgestaltung wird das Speichermodul mit der geringsten Speicherkapazität beim Entladevorgang immer so stark nachgeladen, wie es die Restkapazität wenigstens eines der anderen Speichermodule ermöglicht. D.h., wenn eines der Speichermodule eine geringere Kapazität aufweist, könnte bei Erreichen von 80% der Kapazität der anderen Speichermodule das Speichermodul mit der geringeren Speicherkapazität immer auf diese 80% der Speichermodule geladen werden, wobei das Umladen von Ladung aus den Speichermodulen mit höherer Kapazität in das Speichermodul mit geringerer Kapazität natürlich auch zur Entladung der Speichermodule mit höherer Kapazität führt, so dass diese nach dem Umladevorgang keine 80% ihrer Kapazität mehr aufweisen. Der Vorteil dieses kapazitätsgesteuerten Ladungsausgleichsverfahrens besteht darin, dass ein Speichermodul mit geringerer Speicherkapazität bei einem Ladezustand von beispielsweise 80% der Kapazität eine höhere Spannung aufweist, als die Speichermodule mit höherer Speicherkapazität. Folglich ist beim weiteren Entladen der Speichermodule das Speichermodul mit geringerer Speicherkapazität auf einem höheren Ladungszustand und wird folglich nicht wieder so schnell entladen, dass es gleich wieder geladen werden muss.

Die Aufgabe wird auch durch ein Verfahren zum Ladungsausgleich von Speichermodulen in einer Energiespeicheranordnung gelöst, wobei die Energiespeicheranordnung wenigstens zwei Speichermodule, die elektrisch in Reihe geschaltet sind, aufweist. Das Verfahren umfasst die Schritte: Messen von Parametern der Speichermodule und Vergleichen mit vorbestimmten Parametern; während eines Ladevorgangs der Energiespeichereinrichtung und bei Überschreiten eines vorbestimmten Parameters in einem Speichermodul, Koppeln dieses Speichermoduls mit dem überschrittenen Parameter mit einem Gleichspannungswandler und wenigstens teilweises Entladen dieses Speichermoduls und Zuführen der entnommenen Ladung zu der gesamten Reihenschaltung der gesamten Speichermodule; während eines Entladevorgangs und bei Unterschreiten eines vorbestimmten Parameters in einem Speichermodul, Koppeln dieses Speichermoduls mit dem unterschrittenen Parameter mit dem Gleichspannungswandler und Zuführen von Ladung zu diesem Speichermodul mit dem unterschrittenen Parameter, wobei die zugeführte Ladung an den Außenanschlüssen der Reihenschaltung entnommen wird.

Ein besonderer Vorteil des kapazitätsgesteuerten Ladungsausgleichs besteht darin, dass die einzige Begrenzung zur Zwischenspeicherung von Energie für das Umladen bzw. den Ladungsausgleich auf die Gesamtkapazität der Energiespeicheranordnung begrenzt ist. Anders als bei einer Vorrichtung zum Ladungsausgleich, die mit einem externen Energiespeicher arbeiten, ist es hier nicht erforderlich einen zusätzlichen Energiespeicher vorzusehen. Darüber hinaus würde jeder zusätzliche Energiespeicher neben Gewicht und Volumen auch in seiner Kapazität beschränkt sein, so dass ein Umladevorgang immer auf der Kapazität des zusätzlichen Energiespeichers beschränkt sein würde.

Ein weiterer Vorteil besteht darin, dass das Entladen und Laden quasi zeitgleich abläuft, d.h. der Betrieb des Geräts bzw. Fahrzeugs muss nicht für den Ladungsausgleich unterbrochen werden.

Darüber hinaus ist es in einer vorteilhaften Ausgestaltung möglich, mehrere Gleichspannungswandler einzusetzen, so dass ein Umladevorgang mit mehren Speichermodulen zeitgleich vorgenommen werden kann.

Die dargelegte erfindungsgemäße Vorrichtung zum Ladungsausgleich bietet darüber hinaus den Vorteil, dass bei mehreren Gleichspannungswandlern ein gleichzeitiges Laden und Entladen von entsprechenden Speichermodulen möglich ist.

Darüber hinaus ist es möglich, den Lade- bzw. Entladevorgang basierend auf der Speicherkapazität erst bei einem vorbestimmten Schwellwert, beispielsweise bei 5% Kapazitätsabweichung zu beginnen.

Mit der erfindungsgemäßen Ausgestaltung ist es möglich, dass der Gleichspannungswandler den Lade- bzw. Entladevorgang eines Speichermoduls mit geringerer Kapazität nicht so lange durchführt, bis der vollständige Vorgang des Ladens- bzw. Entladens abgeschlossen ist. Die erfindungsgemäße Ausgestaltung ist auch in der Lage, dass der Gleichspannungswandler in einer gemultiplexten Art sich um mehrere Speichermodule sequentiell kümmert, um somit einen optimierten Ladungsausgleich zu gewährleisten.

Mit der vorteilhaften Ausgestaltung ist ebenso möglich, dass beim Ladevorgang und bei bekannten Speicherkapazitäten der in Reihe geschalteten Speichermodule das Speichermodul mit der geringsten Speicherkapazität zuerst nicht geladen wird, d.h. die anderen Speichermodule mit höherer Speicherkapazität werden bis zu einem bestimmten Schwellwert aufgeladen und dann wird das Speichermodul mit der geringeren Speicherkapazität dazu geschaltet und mit aufgeladen. Da sich das Speichermodul mit geringerer Kapazität nicht aus der Reihenschaltung entfernen lässt, erfolgt die Umladung oder das "Nicht-Laden" in der Art und Weise, dass das Speichermodul mit geringerer Speicherkapazität beim Laden sofort entladen wird, so dass sich dort keine Speicherkapazität aufbauen kann und die Verbindung dieses Speichermoduls zum Gleichspannungswandler erst dann unterbrochen wird, wenn die Speichermodule mit höherer Speicherkapazität einen gewissen Schwellwert überschritten haben. Vorzugsweise ist dieser Schwellwert so hoch, wie die Differenz in den Speicherkapazitäten der Speichermodule. D.h. bei vier Speichermodulen, von denen eines nur noch 80% Speicherkapazität hat, werden die drei Speichermodule mit höherer Speicherkapazität zuerst auf 20% aufgeladen, so dass dann das Speichermodul mit geringerer Speicherkapazität ab Erreichen der 20% dazu geschaltet wird und dann mit den anderen auf 100% aufgeladen wird.

Die Art und Weise des Ladevorgangs kann dabei vorzugsweise durch Steuersignale von einem externen System erfolgen. Bei einem Elektrofahrzeug kann dies beispielsweise der Fahrzustand sein, oder die Temperaturverhältnisse. Für die Entscheidung, ob das Speichermodul mit geringerer Kapazität anfänglich nicht geladen wird oder ab 50% oder 80% oder einem anderen vorbestimmten Schwellwert entladen wird, kann insbesondere davon abhängen, ob demnächst mit einem Entladevorgang zu rechnen ist. D.h., wenn bspw. ein Elektrofahrzeug über Nacht in der Garage geladen wird, kann man davon ausgehen, dass das Fahrzeug während des Ladevorgangs nicht bewegt wird und ein Entladevorgang der Energiespeichervorrichtung beginnt. In einem derartigen Fall wird das Speichermodul mit geringer Kapazität anfänglich nicht geladen und es wird erst nach Erreichen von bspw. 20% Ladungszustand der anderen Speichermodule begonnen, dieses Speichermodul zu laden bzw. das zeitgleiche Entladen dieses Speichermoduls wird beendet. Anderenfalls, wenn nicht gesichert ist, dass das Laden vollständig durchgeführt werden kann, ist es vorteilhaft mit dem Laden auch des Speichermoduls mit geringerer Kapazität gleich zu beginnen, da bei einer Entladung dann auch das Speichermodul mit geringerer Kapazität eine Ladung aufweist und diese abgeben kann, ohne dass sofort mit einem Umladen von den anderen Speichermodulen begonnen werden muss.

Mit der erfindungsgemäßen Vorrichtung zum Ladungsausgleich ist auch ein Ausgleichen während der Fahrt möglich, so dass für den üblichen Ladungsausgleich nicht angehalten werden muss. Das sofortige Ausgleichen der Speicherkapazitäten ist deshalb möglich, da die Speicherkapazitäten bekannt sind und ein gleichzeitiges Entladen eines Speichermoduls und Laden der Reihenschaltung der Speichermodule bzw. Laden eines einzelnen Speichermoduls und Entladen der Reihenschaltung der Speichermodule über den bidirektionalen Gleichspannungswandler möglich sind.

Im Folgenden wird anhand von Figuren die vorliegende Erfindung näher erläutert. In den Zeichnungen zeigen:
Fig. 1 einen Schaltplan einer erfindungsgemäßen Energiespeichervorrichtung mit einem Gleichspannungswandler;
Fig. 2 einen Schaltplan einer erfindungsgemäßen Energiespeichervorrichtung mit mehreren Gleichspannungswandlern;
Fig. 3 ein Flussablaufdiagramm für ein kapazitätsgesteuertes Entladen gemäß der vorliegenden Erfindung;
Fig. 4 ein Flussablaufdiagramm für ein spannungsgesteuertes Entladen gemäß der vorliegenden Erfindung;
Fig. 5 ein Flussablaufdiagramm für ein kapazitätsgesteuertes Laden gemäß der vorliegenden Erfindung;
Fig. 6 ein Flussablaufdiagramm für ein spannungsgesteuertes Laden gemäß der vorliegenden Erfindung;

Im Folgenden wird die Erfindung anhand der Figuren beispielhaft beschrieben. Dabei sind die in den Figuren angegebenen Ausführungsbeispiele nicht einschränkt. Merkmale, die in einer Figur eines Ausführungsbeispiels beschrieben sind, jedoch bei einem anderen Ausführungsbeispiel nur in der Figur gezeigt sind, sind auch für dieses Ausführungsbeispiel anwendbar und nur aus Zwecken der Übersichtlichkeit nicht erneut beschrieben worden.

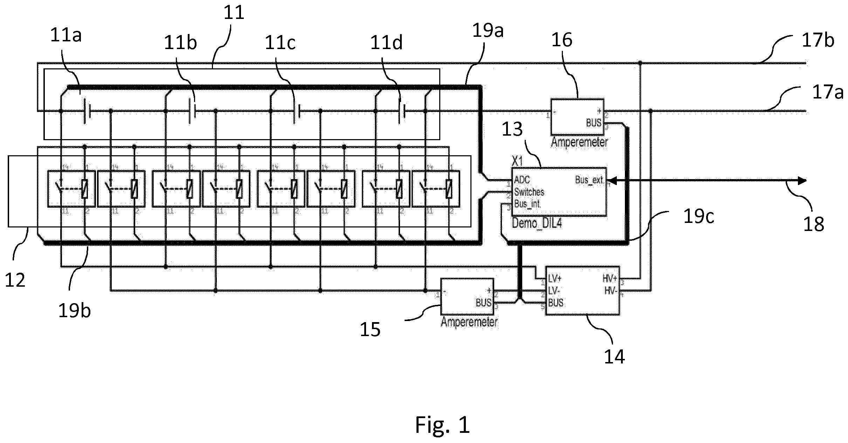

Figur 1 zeigt einen Schaltplan eines ersten Ausführungsbeispiels einer erfindungsgemäßen Energiespeicheranordnung 11 mit einem Gleichspannungsspannungswandler 14. Die Energiespeicheranordnung 11 enthält in diesem Ausführungsbeispiel vier Speichermodule 11a, 11b, 11c, 11d, die in Reihe geschaltet sind. Die Speichermodule 11a bis 11d sind vorzugsweise Lithium-Ionen-Speichermodule. Es können jedoch auch andere Speichermodule bzw. Batterien, beispielsweise Nickelmetallhydrid- und Nickel-Cadmium-Speichermodule verwendet werden. Die Reihenschaltung kann dabei aus wenigstens zwei Speichermodulen bestehen. Ein Speichermodul kann auch als Akkupack oder Sheet bezeichnet werden. Ein Speichermodul ist aus einer Vielzahl von einzelnen Speicherzellen aufgebaut. Innerhalb des Speichermoduls können die Zellen sowohl in Reihe als auch parallel oder in einer Kombination davon miteinander verschaltet sein.

Die Schaltungsanordnung gem. Fig. 1 umfasst neben der Energiespeicheranordnung 11, weiter eine Schaltvorrichtung 12, einen Gleichspannungswandler 14 und eine Steuervorrichtung 13. Weiter sind Strommessgeräte 15 und 16 vorhanden.

Die Speichermodule 11a bis 11d weisen jeweils Anschlüsse auf, die in der Fig. 1 nicht näher bezeichnet sind. An jeden dieser Anschlüsse ist wenigstens ein steuerbarer Schalter der Schaltvorrichtung 12 angeschlossen. Die Schaltvorrichtung 12 enthält mehrere steuerbare Schalter, wobei vorzugsweise jeder Schalter einem der Anschlüsse eines jeden Speichermoduls zugeordnet ist. D.h. das Speichermodul 11a ist sowohl an seinem Pluspol als auch an seinem Minuspol mit einem steuerbarer Schalter der Schaltvorrichtung 12 verbunden. Das gleiche gilt für die Speichermodule 11b bis 11d, die ebenfalls jeweils an ihrem Plus- bzw. Minuspol einen Anschluss aufweisen, der mit einem steuerbaren Schalter in der Schaltvorrichtung 12 verbunden ist.

Die Schaltvorrichtung 12 ist auf ihrer anderen Seite mit dem Gleichspannungswandler 14 verbunden, insbesondere mit der ersten Seite des Gleichspannungswandlers 14, die in diesem Ausführungsbeispiel als Niedrigspannungsseite (Low-Voltage) bezeichnet wird. Konkret ist der positive Anschluss des ersten Speichermoduls 11a über einen Schalter der Schaltvorrichtung 12 mit dem positiven Anschluss der ersten Seite des Gleichspannungswandlers 14 koppelbar, wobei der negative Anschluss des Speichermoduls 11a über einen weiteren Schalter innerhalb der Schaltvorrichtung 12 mit dem negativen Anschluss der ersten Seite des Gleichspannungswandlers 14 verbunden ist. Dies gilt analog für die anderen Speichermodule 11b-11d.

Gemäß dem Ausführungsbeispiel in Fig. 1 ist in die Zuleitung zum negativen Anschluss der ersten Seite des Gleichspannungswandlers 14 ein Strommesser 15 geschaltet, um den Strom zu messen, der aus einem oder mehreren Speichermodulen, die über die Schalter der Schaltvorrichtung 12 mit dem negativen Anschluss der ersten Seite des Gleichspannungswandlers 14 verbunden sind, zu messen. Der Strommesser 15 kann jedoch auch in die positive Zuleitung der ersten Seite des Gleichspannungswandlers 14 eingebaut sein.

Ein weiterer Bestandteil der Schaltungsanordnung gemäß Fig. 1 ist die Steuervorrichtung 13, die mehrere Anschlüsse aufweist. Die Steuervorrichtung 13 ist über die Busleitung 19a mit den Speichermodulen 11a bis 11d verbunden, um Spannungswerte der Speichermodule 11a bis 11d zu erfassen und der Steuervorrichtung 13 zuzuführen und diese Spannungswerte dort in ADCs in digitale Spannungswerte umzuwandeln, um diese Spannungswerte der einzelnen Speichermodule 11a bis 11d für die Steuerung eines Lade- bzw. Entladevorgangs der Energiespeichervorrichtung 11 zu verwenden. Ein weiterer Anschluss der Steuervorrichtung 13 ist mit der Busleitung 19b verbunden, über die die einzelnen Schalter in der Schaltvorrichtung 12 gesteuert werden. Die Schalter in der Schaltvorrichtung 12 können dabei sowohl als Transistoren als auch als Relais ausgebildet sein oder als jegliche andere geeignete Art von steuerbaren Schaltern, die sich von der Steuervorrichtung 13 steuern lassen. Über die Busleitung 19b lassen sich die Schalter einzeln oder auch in Gruppen von der Steuervorrichtung 13 steuern. Die Steuervorrichtung 13 weist darüber hinaus noch einen Anschluss zur Erfassung der Stromwerte auf und ist dazu mit den Strommessern 15 und 16 verbunden.

Über ein weiteres Bussystem 19c ist die Steuervorrichtung 13 mit den Stromessern 15, 16 und einem Gleichspannungswandler 14 gekoppelt.

Weiter ist in der Schaltungsanordnung gemäß Fig. 1 der Gleichspannungswandler 14 vorgesehen, der eine erste Seite, die in diesem Ausführungsbeispiel als Niedrigspannungsseite bezeichnet wird, mit einem positiven und negativen Anschluss aufweist. Der Gleichspannungswandler 14 weist darüber hinaus eine zweite Seite mit einem positiven und einem negativen Anschluss auf, die als Hochspannungsseite bezeichnet wird.

Darüber hinaus weist der Gleichspannungswandler 14 einen Steueranschluss auf, über den der Gleichspannungswandler 14 von der Steuervorrichtung 13 gesteuert werden kann bzw. Werte vom Gleichspannungswandler 14 an die Steuervorrichtung 13 übertragen werden können.

Weiter ist in der Schaltungsanordnung gemäß Fig. 1 ein Amperemeter bzw. Strommesser 16 vorgesehen. Dieser befindet sich in der Zuleitung 17a zur Erfassung des Stroms, der durch die Speichermodule 11a bis 11d fließt. Dieser Amperemeter 16 ist ebenfalls über die Steuerleitung 19c mit der Steuervorrichtung 13 verbunden, um die erfassten Stromwerte an die Steuervorrichtung 13 zu übertragen.

An die Außenanschlüsse 17a und 17b wird entweder eine Last angelegt (in der vorliegenden Schaltung nicht dargestellt) oder es werden über diese Anschlüsse 17a oder 17b entsprechende Ströme zugeführt, um die Energiespeicheranordnung von einer externen Energiequelle, bspw. einem Hausanschluss oder einer Stromtankstelle zu laden. Die Steuervorrichtung 13 weist außerdem einen externen Ein- und Ausgang 18 auf, über den die Steuervorrichtung 13 mit externen Geräten kommunizieren kann. Beispielsweise kann die Steuervorrichtung 13 an einen Bordcomputer eines Fahrzeuges oder an eine zentrale Steuervorrichtung des Geräts angeschlossen sein, in dem die Energiespeicheranordnung 11 angeordnet ist. Über diesen Anschluss 18 kann die Steuervorrichtung 13 Befehle zum Laden bzw. zum Entladen erhalten. Es können jedoch auch Ladungsprofile in die Steuervorrichtung 13 übertragen werden und/oder Werte der einzelnen Speichermodule von der Steuervorrichtung 13 an eine übergeordnete Steuerung übergeben werden.

Der Gleichspannungswandler 14 dient dazu, eine Gleichspannung beispielsweise der Zellen des Speichermoduls 11a, die über die zwei linksseitigen Schalter der Schaltvorrichtung 12 mit der ersten Seite des Gleichspannungswandlers 14 verbunden sind, zu empfangen und diese Spannung in eine andere Gleichspannung umzusetzen, die zum Laden der gesamten Energiespeicheranordnung geeignet ist. Da beispielsweise eine Lithium-Ionen-Zelle eine Ladeschlussspannung von ca.4,2 V aufweist, ist es also möglich, der ersten Seite des Gleichspannungswandlers 14 eine Spannung von 4,2 V zuzuführen, wobei ausgangseitig auf der zweiten Seite des Gleichspannungswandlers 14 zum Laden der vier in Reihe geschalteten Speichermodule 11a -11d eine Spannung für die vier in Reihe geschalteten Speichermodule 11a -11d ausgegeben wird, also max. 4x 4,2V. Bei der Ausgabe der Spannung kann an der zweiten Seite des Gleichspannungswandlers 14 ein vorbestimmtes Ladungsprofil, bspw. eine Folge von Ladungspulsen ausgegeben werden, um damit die vier in Reihe geschalteten Speichermodule 11a -11d optimal zu laden. Ein Laden mit zu hoher Spannung kann auch zu Beschädigungen der Speichermodule 11a -11d führen. Daher wird im Gleichspannungswandler 14 eine kontrollierte Umsetzung der Eingangsspannung in eine geeignete Ausgangsspannung vorgenommen, wobei neben der Spannung auch der ausgegebene Strom gesteuert wird. Diese Steuerung wird von der Steuervorrichtung vorgenommen, wobei die aktuelle erfassten Spannungswerte, Stromwerte, Temperaturwerte und externen Anforderungsprofile berücksichtigt werden.

Diese Umsetzung der Eingangsspannung in die Ausgangsspannung wird im Gleichspannungswandler entsprechend vorgenommen, so dass der Gleichspannungswandler die Ladungsmenge, die er dem Speichermodul 11a entnimmt, mit ansprechend angepasster Spannung an die Außenanschlüsse 17a und 17b der Energiespeicheranordnung 11 zuführt, um somit die Gesamtheit der Speichermodule 11a bis 11d in der Energiespeicheranordnung 11 zu laden.

Während des Entladevorgangs bei dem an die Außenanschlüsse 17a und 17b eine Last geschaltet ist, wird der Gleichspannungswandler 14 entgegengesetzt oder umgekehrt zum Ladevorgang betrieben. In diesem Fall wird bei Erreichen einer Entladeschlussspannung bzw. eines definierten Schwellwerts der Speicherkapazität eines der Speichermodule, dieses eine Speichermodul mit der ersten Seite (Low Voltage) des Gleichspannungswandlers 14 verbunden, wobei die Ladung, die dem fast entladenen Speichermodul zugeführt werden muss, an den Außenanschlüssen 17a und 17b der gesamten Energiespeicheranordnung 11 entnommen wird.

Folglich wird hier auf der zweiten Seite eine Spannung von beispielsweise 14 V in den Gleichspannungswandler 14 eingespeist. Diese wird heruntertransformiert und die entsprechende Ladung wird dem Speichermodul, welches den vordefinierten Schwellwert (Spannung oder Speicherkapazität) unterschritten hat, zugeführt, um dieses Speichermodul so aufzuladen, dass es einen Spannungswert oder Ladungszustand über dem definierten Schwellwert aufweist.

In der Schaltungsanordnung gemäß Fig. 1 ist ein Gleichspannungswandler 14 vorgesehen, der jedoch bei entsprechender Ansteuerung der Schalter in der Schaltvorrichtung 12 auch in der Lage ist eines, zwei oder drei Speichermodule gleichzeitig zu entladen und die entnommene Ladung der gesamten Energiespeicheranordnung an den Außenanschlüssen wiederum zuzuführen. D.h., wenn nicht nur ein Speichermodul eine reduzierte Speicherkapazität aufweist, sondern drei Speichermodule eine geringere Speicherkapazität aufweisen, als ein viertes Speichermodul, ist es möglich, entweder die drei Speichermodule parallel während eines Ladevorgangs zu entladen, um ein Weiterladen des vierten Speichermoduls zu ermöglichen. Es ist aber auch möglich, die drei Speichermodule mit geringerer Speicherkapazität sequentiell zu entladen und die entnommene Ladung jeweils an den Außenanschlüssen der gesamten Energiespeicheranordnung 11 zuzuführen. Beim sequentiellen Entladen von mehreren Speichermodulen mit geringerer Speicherkapazität während des Ladevorgangs der Energiespeicheranordnung kann das Entladen der einzelnen Speichermodule für eine vorbestimmte Zeit pro Speichermodul vorgenommen werden. Der Entladevorgang eines einzelnen Speichermoduls während des Ladevorgangs der Energiespeicheranordnung über die Schaltvorrichtung 12 und den Gleichspannungswandler 14 kann jedoch auch so lange durchgeführt werden, bis das betreffende Speichermodul mit geringerer Speicherkapazität unter einen definierten Spannungswert oder Ladungszustand gefallen ist.

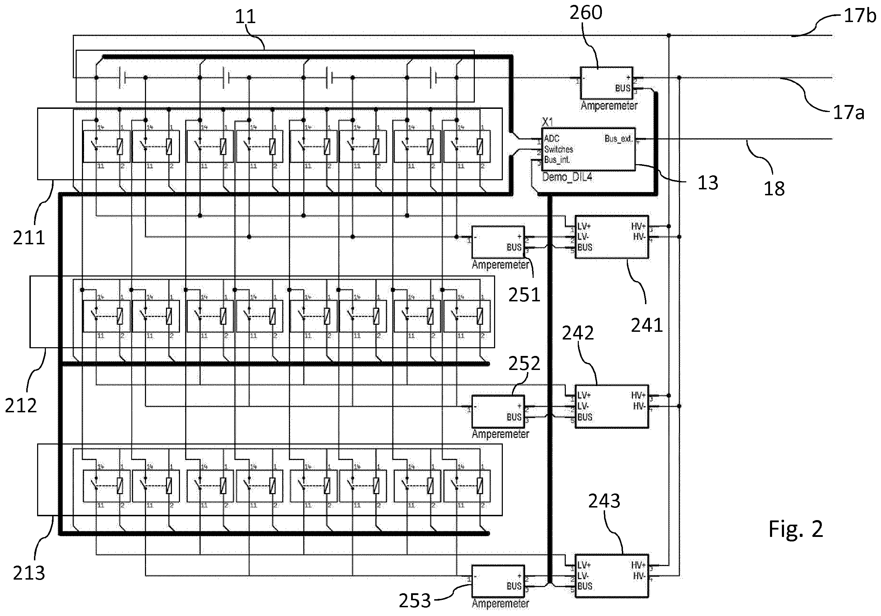

In einem anderen Ausführungsbeispiel gemäß Fig. 2 ist eine Energiespeicheranordnung 11 vorgesehen, die mit drei Schaltvorrichtungen 211, 212 und 213 koppelbar ist. Jede Schaltvorrichtung 211, 212 und 213 ist jeweils an einen Gleichspannungswandler 241, 242 und 243 angeschlossen. Die Steuereinrichtung 13 steuert jeweils die Schalter in den Schaltvorrichtungen 211, 212 und 213, um Speichermodule 11a-11d der Energiespeicheranordnung 11 entsprechend mit einem oder mehreren der Gleichspannungswandler 241, 242 und 243 zu verbinden. Jeder Schaltvorrichtung 211, 212, 213 bzw. jedem Gleichspannungswandler 241, 242, 243 ist in der Zuleitung auf der Niedrigspannungsseite ein Amperemeter 251, 252 und 253 zugeordnet, um den Strom zu messen, der in den bzw. aus dem Gleichspannungswandler 241, 242 oder 243 ein- bzw. ausgegeben wird. An den Außenanschlüssen 17a, 17b auf der Zuleitungsseite ist ein Strommesser bzw. Amperemeter 260 vorgesehen, um den der gesamten Energiespeicheranordnung 11 zugeführten Strom zu messen. Die Steuerungsvorrichtung 13 ist ebenso über einen Ein- bzw. Ausgang 18 an externe Geräte koppelbar. Mittels der Schaltung gemäß Fig. 2 ist es während eines Ladevorgangs bzw. Entladevorgangs der Energiespeicheranordnung 11 möglich, drei der Speichermodule 11a- 11d gleichzeitig zu entladen bzw. zu laden, wobei das Entladen/Laden eines einzelnen Speichermoduls während des Ladevorgangs/Entladevorgangs der gesamten Energiespeichervorrichtung 11 durch jeweils einen einzelnen Gleichspannungswandler 241, 242, 243 gesteuert wird. Mit der Schaltung gemäß Fig. 2 ist es darüber hinaus auch möglich, ein Laden bzw. Entladen von verschiedenen Speichermodulen über verschiedene Gleichspannungswandler gleichzeitig durchzuführen. So es ist beispielsweise möglich, ein Speichermodul, welches seine Ladeschlussspannung bzw. vorbestimmten Ladungszustand erreicht hat, zu entladen, um ein Weiterladen der anderen Speichermodule zu ermöglichen.

Gleichzeitig ist es möglich, ein Speichermodul, welches unterhalb eines vorbestimmten Ladungszustands oder einer kritischen Kapazitätsschwelle bzw. Spannungsschwelle liegt, aufzuladen, obwohl ein anderes Speichermodul durch einen anderen Gleichspannungswandler 241, 242, 243 entladen wird, da es bspw. seine Ladeschlussspannung oder einen vorbestimmten Schwellwert einer Kapazität oder Spannung erreicht hat.

Der üblichere Fall, für den die Schaltung gemäß Fig. 2 vorgesehen ist, ist jedoch, dass die Speichermodule in der Energiespeicheranordnung 11 verschiedene Speicherkapazitäten aufweisen und demzufolge entsprechend vorgegebene Ladeschlussspannungen bzw. Entladeschlussspannungen bzw. vorbestimmte Schwellwerte zu verschiedenen Zeitpunkten überschreiten bzw. unterschreiten, so dass jedes Speichermodul individuell von einem Gleichspannungswandler 241, 242 und 243 entladen bzw. geladen werden kann.

Der Vorteil der Schaltung gemäß Fig. 2 besteht insbesondere darin, dass der Ausgleichsvorgang schneller ablaufen kann, als bei einer Schaltung gemäß Fig. 1, bei der der eine Gleichspannungswandler 14 sequentiell für verschiedene Speichermodule verwendet werden muss, wodurch das Ausgleichen der Ladungszustände der einzelnen Speichermodule zeitlich verlängert wird.

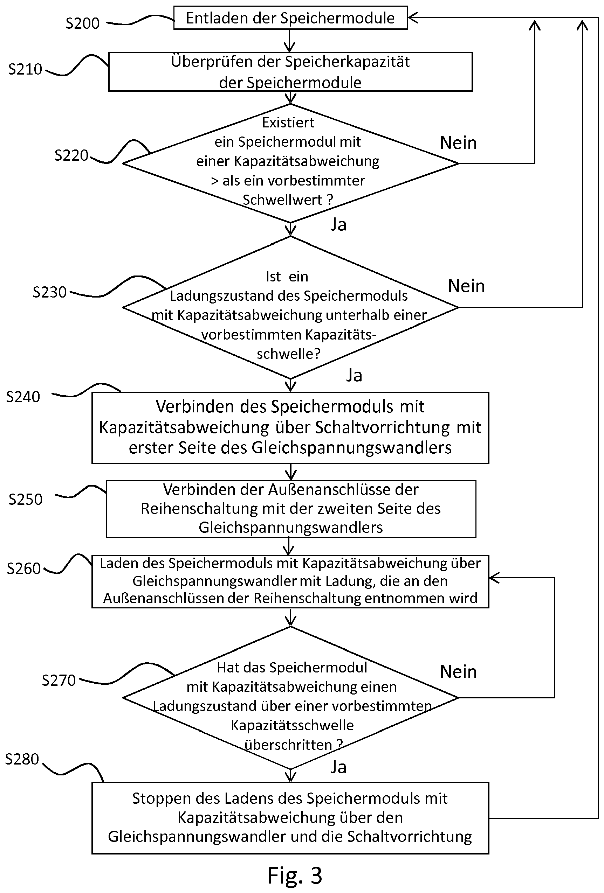

Fig. 3 zeigt ein Flußablaufdiagramm für einen Entladevorgang der Energiespeichervorrichtung. Ein typischer Entladevorgang ist beispielsweise das Fahren oder Beschleunigen eines Elektro-Fahrzeugs bzw. das Betreiben eines akkubetriebenen Bohrschraubers.

Im Schritt S200 wird der Entladevorgang bspw. durch Betätigen des Gaspedals bzw. des Auslösers gestartet. Danach wird im Schritt S210 die Speicherkapazität der einzelnen Speichermodule überprüft. Eine Kapazitätsmessung oder Bestimmung der Kapazität ist anhand der Spannungskurve über den Ladungszustand der Speichermodule möglich, so dass anhand der Spannung auf die Kapazität geschlossen werden kann.

Im Schritt S220 wird nach Erfassen der einzelnen Speicherkapazitäten der Speichermodule festgestellt, ob ein Speichermodul in der Reihenschaltung der Speichermodule existiert, welches in seiner Speicherkapazität von den Speicherkapazitäten der anderen Speichermodule abweicht. Wenn eine vorbestimmte Kapazitätsabweichung unter den einzelnen Speichermodulen vorliegt, wird im Schritt S230 festgestellt, ob ein Ladungszustand des Speichermoduls mit Kapazitätsabweichung unterhalb einer vorbestimmten Kapazitätsschwelle liegt. D.h. es wird festgestellt, ob das betreffende Speichermodul stärker entladen ist, als die anderen. Wenn bspw. ein Speichermodul nur noch 80% seiner üblichen Speicherkapazität hat, ist es beim Entladen der Energiespeicheranordnung schneller leer als die anderen Speichermodule mit höherer Speicherkapazität.

Wenn jedoch im Schritt S220 keine Kapazitätsabweichung festgestellt wird, werden die Speichermodule 11a bis 11d weiter entladen und von der Steuervorrichtung 13 überprüft bis sich nach mehreren Lade- und Entladezyklen eine Abweichung der Speicherkapazität der einzelnen Speichermodule einstellt.

Im Schritt S230 wird überprüft, ob eines der Speichermodule 11a- 11d mit geringerer Speicherkapazität einen Ladungszustand unterhalb einer bestimmten Kapazitätsschwelle aufweist. Also einen Ladungszustand von beispielsweise nur noch 30% seiner Speicherkapazität aufweist. Wenn diese Schwelle nicht unterschritten ist, wird zurückgekehrt zum Entladen der Speichermodule in S200. Ist ein Ladungszustand des Speichermoduls mit geringerer Speicherkapazität unterhalb einer vorbestimmten Kapazitätsschwelle, wird dieses Speichermodul mittels der Schaltvorrichtung 12 mit der ersten Seite des Gleichspannungswandlers 14 verbunden. Dazu werden die zwei Schalter, die an die Anschlüsse des jeweiligen Speichermoduls angeschlossen sind, geschlossen, so dass dieses Speichermodul dann mit dem positiven und negativen Anschluss des Gleichspannungswandlers 14 auf der ersten Seite des Gleichspannungswandlers 14 verbunden ist. Dazu kann die Steuervorrichtung einen Befehl über die Busleitung 19a an die entsprechenden Schalter senden. Im Schritt S250 werden die Anschlüsse der zweiten Seite des Gleichspannungswandlers 14 mit den Außenanschlüssen 17a, 17b gekoppelt. Im Gleichspannungswandler 14 können die positiven und negativen Anschlüsse sowohl auf der ersten als auch auf der zweiten Seite aktiv geschaltet werden. Insbesondere muss im Gleichspannungswandler 14 die Spannung auf der Eingangs- bzw. Ausgangsseite entsprechend angepasst werden. Im Schritt S260 wird das Speichermodul mit der Kapazitätsabweichung über den Gleichspannungswandler 14 mit einer Ladung geladen, die von Außenanschlüssen 17a, 17b der Reihenschaltung abgenommen wurde. Die Energiespeicheranordnung 11 weist insgesamt einen höheren Ladungszustand auf, als das einzelne Speichermodul, welches eine geringere Speicherkapazität und einen Ladungszustand unterhalb einer vorbestimmten Kapazitätsschwelle aufweist, so dass ein Teil der Ladung der gesamten Energiespeicheranordnung 11 entnommen wird und diesem einen Speichermodul zugeführt wird, um dieses eine Speichermodul wieder zu laden und seinen Ladungszustand über eine entsprechende Kapazitätsschwelle zu heben, um somit einen längeren Entladevorgang der gesamten Energiespeicheranordnung zu gewährleisten und um dieses eine Speichermodul zu schonen, da es bekannt ist, dass insbesondere Lithium-Ionen-Zellen bei Erreichen der Entladeschlussspannung stärker degenerieren, als wenn sie in einem mittleren Spannungsbereich betrieben, ohne jeweils an die vorgegebenen Entlade bzw. Ladeschlussspannung herangeführt zu werden.

Im Schritt S270 wird überprüft, ob das entsprechende Speichermodul, welches zuvor geladen wurde, jetzt einen Ladungszustand aufweist, der über der vorbestimmten Kapazitätsschwelle liegt. Solange diese Kapazitätsschwelle nicht überschritten ist, wird mit dem Schritt S260 fortgefahren. Ist die Kapazitätsschwelle überschritten, wird das Laden des betreffenden Speichermoduls mit Kapazitätsabweichung über den Gleichspannungswandler 14 und die Schaltvorrichtung 12 beendet.

Der Prozess kann dann mit einem anderen Speichermodul fortgeführt werden. Es kann aber auch sein, dass, wenn der Entladevorgang der Energiespeicheranordnung fortgesetzt wird und die Energiespeicheranordnung weiter entladen wird, dass insbesondere dieses eine Speichermodul mit seiner geringeren Speicherkapazität wiederum schneller unter die vorbestimmte Kapazitätsschwelle fällt, so dass ein erneutes Nachladen des Speichermoduls mit geringerer Speicherkapazität erforderlich wird. Dann wird Ablauf gemäß Fig. 3 wiederholt.

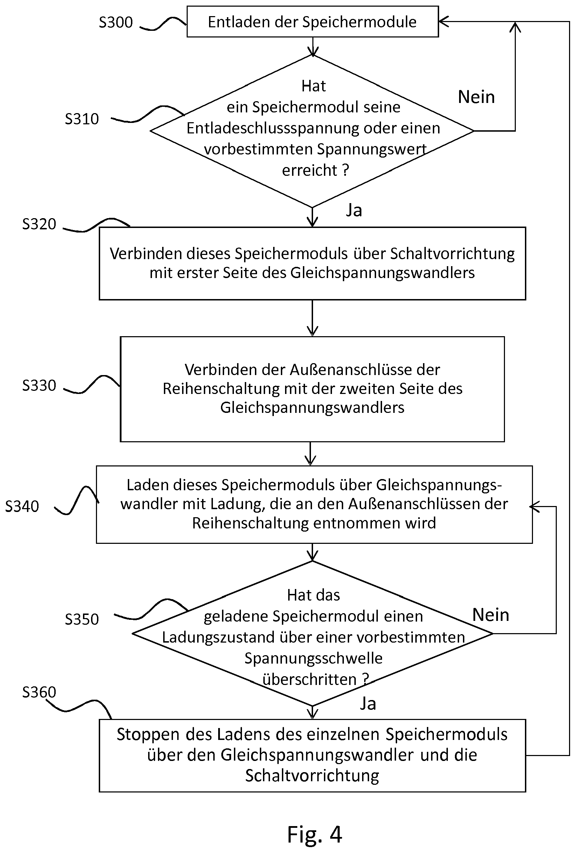

Im Flußablaufdiagramm gemäß Fig. 4 ist ein anderes Verfahren zum Entladen der Speichermodule 11a bis 11d einer Energiespeicheranordnung 11 gezeigt, bei der für die Entscheidung, ob ein individuelles Nachladen eines einzelnen Speichermoduls notwendig ist oder nicht, eine Spannungsüberwachung vorgenommen wird. Im Schritt S300 wird der Entladevorgang der Speichermodule 11 a bis 11d der Energiespeicheranordnung 11 gestartet, beispielsweis indem ein Elektrofahrzeug mit der Energiespeicheranordnung 11 fortbewegt wird oder ein akkubetriebener Bohrschrauber in Betrieb gesetzt wird. Im Schritt S310 wird überprüft, ob eines der Speichermodule der Energiespeicheranordnung seine Entladeschlussspannung oder einen vorbestimmten Spannungswert erreicht hat. Die Entladeschlussspannung ist die Spannung, die im Datenblatt des Herstellers der Zelle angegeben ist, wobei diese beispielsweise bei Lithium-Ionen-Zellen bei 2,5V liegt. Ein vorbestimmter Spannungswert kann von dem Wert der Entladeschlussspannung aus dem Datenblatt abweichen und darüber oder darunter liegen. Solange keines der Speichermodule seine Entladeschlussspannung oder den vorbestimmten Spannungswert erreicht hat, verbleibt das Verfahren in der Schleife zwischen den Schritten S300 und S310. Nach Erreichen der Entladeschlussspannung oder eines vorbestimmten Spannungswertes wird der Prozess mit Schritt S320 fortgesetzt, bei dem das Speichermodul, welches die Entladeschlussspannung oder einen vorbestimmten Spannungswert erreicht hat, über die Schalter in der Schaltvorrichtung 12 mit der ersten Seite des Gleichspannungswandlers 14 verbunden wird.

Gleichzeitig oder danach werden die Außenanschlüsse 17a und 17b der Energiespeicheranordnung 11 der Reihenschaltung der Speichermodule mit der zweiten Seite des Gleichspannungswandlers 14 verbunden, um im Schritt S340 eine Ladung an den Außenanschlüssen 17a und 17b der Energiespeicheranordnung 11 zu entnehmen und diese Ladung/Spannung über den Gleichspannungswandler 14 so anzupassen, dass sie dem zu ladenden Speichermodul zugeführt werden kann, welches im Schritt S310 die Entladeschlussspannung bzw. den vorbestimmten Spannungswert erreicht hat. Der Ladevorgang des einzelnen Speichermoduls mit einer Ladung, die mit den Außenanschlüssen der Reihenschaltung entnommen wurde, wird solange fortgeführt, bis im Schritt S350 das geladene Speichermodul einen Ladungszustand aufweist, der über einer vorbestimmten Spannungsschwelle liegt. Hat das Speichermodul, was im Schritt S310 einen vorbestimmten Spannungswert erreicht hat, einen anderen vorbestimmten Spannungswert oder den gleichen Spannungswert überschritten, wird der Ladevorgang des Speichermoduls über den Gleichspannungswandler 14 und die Schaltvorrichtung 12 beendet.

Der wesentliche Vorteil beim kapazitätsgesteuerten Laden bzw. Entladen liegt darin, die Entlade-/Ladeleistung der Energiespeicheranordnung trotz Kapazitätsverlust einer oder mehrerer Speichermodule über einen möglichst langen Zeitraum aufrecht zu erhalten. Außerdem kann dadurch die volle Kapazität aller Zellen genutzt werden. Bei herkömmlichen Systemen würde die nutzbare Kapazität aller guten Speichermodule auf die des kapazitäts-ärmsten Speichermoduls reduziert werden.

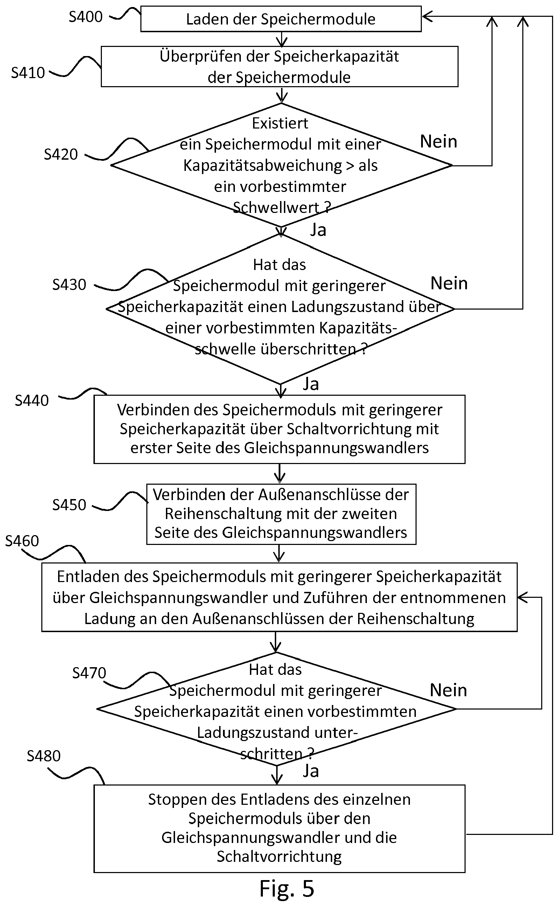

In Fig. 5 ist der Ladevorgang der Energiespeicheranordnung 11 beschrieben, bei dem die Entscheidung, ob eines der Speichermodule 11a - 11d entladen werden muss, um ein weiteres Laden der anderen Speichermodule zu gewährleisten, auf der Speicherkapazität der einzelnen Speichermodule basiert.

Im Schritt S400 wird der Ladevorgang der Speichermodule 11a- 11d gestartet, in dem die Energiespeicheranordnung 11 an eine externe Energiequelle angeschlossen wird. Im Schritt S410 wird die Speicherkapazität der einzelnen Speichermodule 11a bis 11d überprüft. Dies kann bspw. ein Initialisierungsprozess sein oder ein Vergleich der in der Steuervorrichtung 13 abgelegten Parameter der einzelnen Speichermodule. Da sich die Speicherkapazität der einzelnen Speichermodule nicht schlagartig ändert, sondern nur über mehrere Lade- bzw. Entladezyklen, ist der Steuervorrichtung 13 bekannt, wie hoch die aktuelle Speicherkapazität jedes Speichermoduls ist. Ein Speichermodul hat eine maximale Speicherkapazität von beispielsweise 10 Ah. Es ist aber nicht unüblich, dass ein Speichermodul nach mehreren Lade- bzw. Entladezyklen durch Degeneration der Zellen oder Ausfall einzelner Zellen in einem Speichermodul eine Speicherkapazität von beispielsweise nur noch 8 Ah aufweist.

In der Steuervorrichtung 13, die über ein Speichermodul oder eine Speicherfunktion verfügt, sind die zugeführten Ströme pro Zeiteinheit erfasst. Somit kennt die Steuervorrichtung 13 die individuelle Speicherkapazität der einzelnen Speichermodule. Zum Feststellen, welchen prozentualen Ladungszustand ein Speichermodul aufweist, wird die Spannung über den einzelnen Speichermodulen erfasst. Da, wie in den Figuren 1 und 2 beschrieben, die Steuervorrichtung 13 über die Busleitung 19a mit den Speichermodulen 11a bis 11d verbunden ist, und somit den aktuellen Spannungswert der einzelnen Speichermodule sowohl während des Lade- bzw. des Entladevorgangs überwachen kann, kann die Steuervorrichtung 13 anhand des Spannungswertes der einzelnen Speichermodule den Ladungszustand des Speichermoduls anhand der Spannung bestimmen. Wenn nun im Schritt S410 die Speicherkapazität der einzelnen Speichermodule überprüft wurde und mit dem Schritt S420 fortgefahren wird, wird festgestellt, ob eines der Speichermodule eine Kapazitätsabweichung aufweist, die größer als ein vorbestimmter Schwellwert ist. Der Schwellwert kann prozentual angegeben werden. Er kann aber auch absolut angegeben werden. So ist es möglich, dass im Schritt S420 eine positive Entscheidung getroffen wird, wenn eine Kapazitätsabweichung von beispielsweise 5% im Vergleich zu den anderen Speichermodulen vorliegt. Es ist aber bei gleichartigen Speichermodulen mit einer Speicherkapazität von 10 Ah auch möglich, zu bestimmten, dass mit Schritt S430 fortgefahren wird, wenn eines der Speichermodule eine Speicherkapazität von 9,5 Ah aufweist. D.h. im Schritt S420 wird anhand der gespeicherten Werte der einzelnen Speichermodule festgestellt, ob ein Ausgleichen zwischen den Speichermodulen basierend auf der Speicherkapazität erforderlich ist.

Im Schritt S430 wird das Speichermodul mit einer geringeren Speicherkapazität bzgl. seines Ladungszustands überprüft, wobei überprüft wird, ob dieses Speichermodul einen Ladungszustand aufweist, der über einer vorbestimmten Kapazitätsschwelle liegt. Da ein Speichermodul, welches grundsätzlich eine geringere Speicherkapazität aufweist, schneller einen Ladungszustand oberhalb einer bestimmten Kapazitätsschwelle erreicht hat, ist es erforderlich zu erkennen, dass dieses Speichermodul mit geringerer Speicherkapazität entsprechend entladen werden muss, um ein Weiterladen der anderen Speichermodule mit normaler Speicherkapazität zu gewährleisten.

Ist ein Ladungszustand bei dem Speichermodul mit geringerer Speicherkapazität über einer vorbestimmten Kapazitätsschwelle erreicht, wird in den Schritten S440 und S450 dieses Speichermodul mit geringerer Speicherkapazität über die Schaltvorrichtung 12 mit der ersten Seite des Gleichspannungswandlers 14 verbunden und die Außenanschlüsse 17a und 17b der Reihenschaltung der Speichermodule werden mit der zweiten Seite des Gleichspannungswandlers 14 verbunden. So ist es beispielsweise möglich, wenn beim Ladevorgang der Speichermodule das Speichermodul mit geringerer Speicherkapazität einen Ladungszustand von beispielsweise 80% erreicht hat, ein Entladen dieses Speichermoduls über den Gleichspannungswandler gestartet wird, um somit ein kontinuierliches Weiterladen der anderen Speichermodule zu gewährleisten, so dass alle Speichermodule am Ende des Ladevorgangs mit 100% gefüllt sind.

Nachdem das Speichermodul mit geringerer Speicherkapazität in den Schritten S440 und S450 einerseits mit der ersten Seite des Gleichspannungswandlers und andererseits mit den Außenanschlüssen der Reihenschaltung der Energiespeicheranordnung verbunden wurde, kann ein Entladen des Speichermoduls mit geringerer Speicherkapazität über den Gleichspannungswandler 14 gestartet werden (Schritt S460), wobei die entnommene Ladung aus diesem Speichermodul mit geringerer Speicherkapazität der Gesamtheit der Speichermodule an den Außenanschlüssen 17a und 17b wiederum zugeführt wird.

Im Schritt S470 wird überprüft, ob das Speichermodul mit geringerer Speicherkapazität einen vorbestimmten Ladungszustand unterschritten hat. Solange dies nicht der Fall ist, wird der Entladevorgang fortgesetzt. Hat das Speichermodul mit geringerer Speicherkapazität einen vorbestimmten Ladungszustand unterschritten, wird das Entladen dieses einzelnen Speichermoduls über den Gleichspannungswandler und die Schaltvorrichtung beendet (S480) und das Speichermodul mit geringerer Speicherkapazität wird zusammen mit den anderen Speichermodulen über die Außenanschlüsse 17a, 17b von der externen Energiequelle geladen.

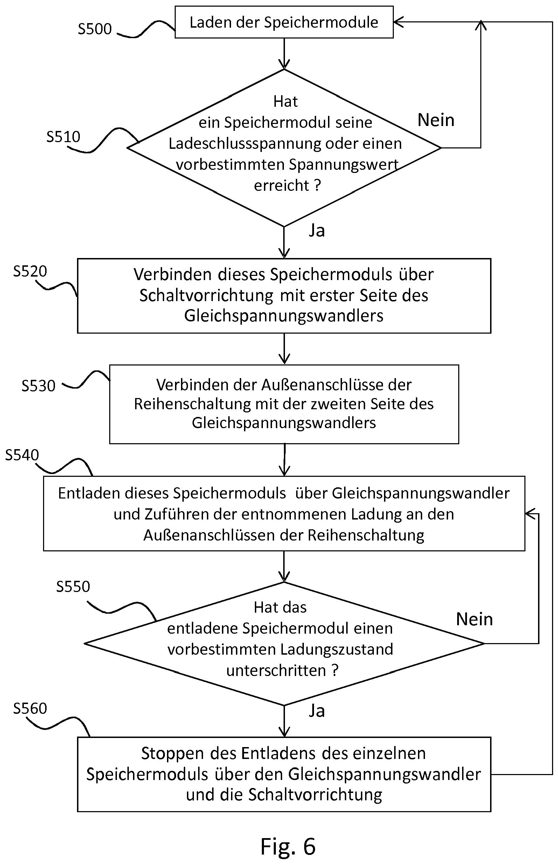

In Fig. 6 wird ein Ladevorgang der Energiespeicheranordnung 11 mit den Speichermodulen 11a bis 11d beschrieben, bei dem zur Entscheidung, ob ein entsprechendes Speichermodul entladen werden muss oder nicht, nur die Ladeschlussspannung bzw. ein vorbestimmter Spannungswert überprüft wird. Nachdem im Schritt S500 der Ladevorgang der Speichermodule der Energiespeicheranordnung 11 gestartet wird, wird in Schritt S510 überprüft, ob eines der Speichermodule seine Ladeschlussspannung oder einen vorbestimmten Spannungswert erreicht hat. Wenn dies der Fall ist, wird der Prozess mit dem Schritt S520 fortgesetzt, in dem dieses Speichermodul, welches beispielsweise seine Ladeschlussspannung bzw. den vorbestimmten Spannungswert erreicht hat, über die Schaltvorrichtung 12 mit der ersten Seite des Gleichspannungswandlers 14 verbunden wird.

Danach bzw. zeitgleich wird im Schritt S530 die zweite Seite des Gleichspannungswandlers 14 mit den Außenanschlüssen 17a, 17b der Reihenschaltung der Speichermodule verbunden, so dass über diese Verbindung ein Entladen des betreffenden Speichermoduls über den Gleichspannungswandler gestartet werden kann (S540), wobei die entnommene Ladung in dem Gleichspannungswandler spannungs- und strommäßig umgesetzt wird und der Gesamtheit der Speichermodule an den Außenanschlüssen 17a und 17b wiederum zugeführt wird.

Dieser Entladevorgang des betreffenden Speichermoduls wird solange fortgesetzt bis das entladene Speichermodul einen vorbestimmten Ladungszustand unterschritten hat (S550). Wenn es diesen Ladungszustand unterschritten hat, und folglich ein gleichmäßiges Laden aller Speichermodule der Reihenschaltung erfolgen kann, wird der Entladevorgang dieses einzelnen Speichermoduls über den Gleichspannungswandler 14 und der Schaltvorrichtung 12 im Schritt S560 gestoppt, in dem die Schalter in der Schaltvorrichtung 12, die mit den Anschlüssen des betreffenden Speichermoduls verbunden sind, geöffnet werden und somit die Verbindung zum Gleichspannungswandler 14 unterbrochen wird.

Im Folgenden wird ein Beispiel anhand von Spannungs- und Kapazitätswerten beschrieben. Bei einer Reihenschaltung von 4 Speichermodulen, die nominal jeweils 10Ah Kapazität hätten, haben jedoch nur noch 3 Speichermodule 10 Ah, eines der vier Speichermodule hat nur noch eine Kapazität von 8Ah. Zu Beginn sind alle Speichermodule leer. Es folgt dann ein Ladevorgang. Prinzipiell kann sobald der Ladevorgang startet auch gleich mit dem Ausgleich begonnen werden, d.h. das Speichermodul mit der geringeren Kapazität von 8Ah wird solange entladen bzw. nicht geladen (d.h. über den Gleichspannungswandler entladen), bis die anderen Speichermodule soweit geladen sind, dass alle Speichermodule ohne weiteren Ausgleich zeitgleich jeweils auf ihre volle Kapazität geladen werden (in dem Beispiel wird also ausgeglichen, bis die drei Speichermodule 2Ah mehr geladen haben als das Speichermodul mit 8Ah).

Beim Entladevorgang, d.h. drei der Speichermodule haben 10Ah und eines 8Ah, kann sofort beim Entladebeginn mit dem Ausgleich gestartet werden. Da der Ausgleich meist langsamer als der gesamte Lade-/Entladevorgang ist, muss mit dem Ausgleich rechtzeitig begonnen werden, also nicht erst wenn das Speichermodul mit geringerer Kapazität bereits an die Grenzspannung (vorbestimmte Spannung bzw. Entladeschlussspannung) kommt. Ansonsten muss die maximale Gesamtlade-/-Entladeleistung auf die Ausgleichleistung reduziert werden, wodurch beispielsweise die Leistung beim Fahren eines E-mobils beschränkt werden würde.

Allerdings darf der Ausgleich auch nicht zu früh beginnen, falls sich die Aktivität in nächster Zeit ändern könnte, also von Laden auf Entladen und umgekehrt wechselt. Das könnte dazu führen, dass das Speichermodul mit geringerer Kapazität beim Laden auf 0Ah gehalten wird, bis die anderen Speichermodule 2Ah erreicht haben. Wenn dann auf einmal Energie abgerufen wird (Entladen), muss wieder die maximale Gesamtlade-/-Entladeleistung auf die Ausgleichleistung reduziert werden.

Das wird jeweils die Steuervorrichtung entscheiden, ob in nächster Zeit ein Zustandswechsel eintreten kann oder nicht und wird den Ausgleichsvorgang dementsprechend starten bzw. verzögern. In einem solchen Fall kann der Ausgleich beim Laden z.B. erst gestartet werden, wenn das Speichermodul mit geringerer Kapazität 50% ihrer Kapazität erreicht hat. Analog verhält es sich beim Entladen.

Der Vorteil der vorliegenden Erfindung besteht einerseits darin, eine Schaltungsanordnung und ein Verfahren zum Laden bzw. zum Entladen von Speichermodulen anzugeben, bei dem keine zusätzliche Zwischenspeicheranordnung für den Ausgleichvorgang erforderlich ist. Dies wird insbesondere dadurch erreicht, dass ein bidirektionaler Gleichspannungswandler verwendet wird, der einen Lade- und Entladevorgang gleichzeitig steuern kann, wodurch ein Weiterladen der Gesamtheit der Speichermodule möglich ist, obwohl eines der Speichermodule, welches beispielsweise einen Ladungszustand oberhalb einer Speicherkapazität bzw. seine Ladeschlussspannung erreicht hat, entladen werden kann. Durch die Verwendung der Gesamtheit der Speichermodule als Zwischenspeicher ist es somit möglich, effizient die Ladung zu verwenden, ohne, dass diese beispielsweise in einer Widerstandsschaltung in Wärme umgewandelt wird.

Gleichzeitig wird ermöglicht, die Ladung beispielsweise während des Ladevorgangs so zu verwenden, dass sie wieder zum Aufladen der noch nicht vollständig geladenen Speichermodule verwendet wird.

Beim Entladevorgang wird somit erreicht, dass ein Ausbalancieren des Ladezustände so lange erfolgt, bis alle Speichermodule einen entsprechenden Schwellwert erreicht haben und somit nicht das Speichermodul, welches als erstes seinen Schwellwert bzw. seine Entladeschlussspannung erreicht, ein Beenden des Entladevorgangs bewirkt.

Die Verwendung der gesamten Energiespeicheranordnung als Zwischenspeicher hat weiter den Vorteil, dass kein zusätzliches Gewicht erforderlich ist, um einen Ausgleichvorgang zu realisieren. Darüberhinaus wird der Ausgleichvorgang zwischen den Speichermodulen nur durch die Speicherkapazität der gesamten Energiespeicheranordnung begrenzt und nicht durch die Speicherkapazität eines separaten Zwischenspeichers.

## Patentansprüche

1. Vorrichtung zum Ladungsausgleich einer Energiespeicheranordnung (11), wobei die Energiespeicheranordnung (11) wenigstens zwei Lithium-Ionen-Speichermodule (11a-11d) umfasst, die elektrisch in Reihe geschaltet sind, daurchgekennzeichnet, dass die Vorrichtung zum Ladungsausgleich umfasst:
- mehrere Schaltvorrichtungen (211, 212, 213), die jeweils mit den Lithium-Ionen-Speichermodulen (11a-11d) der Energiespeicheranordnung gekoppelt sind,
- mehrere Gleichspannungswandler (241, 242, 243), die jeweils eine erste Seite mit einem positiven Anschluss und einem negativen Anschluss und eine zweite Seite mit einem positiven Anschluss und einem negativen Anschluss umfassen, wobei die erste Seite von jedem der Gleichspannungswandler (14) über eine entsprechende, dem jeweiligen Gleichspannungswandler zugeordnete Schaltvorrichtung der mehreren Schaltvorrichtungen (211, 212, 213) mit jedem der Lithium-Ionen-Speichermodule (11a-11d) koppelbar ist, und die zweite Seite von jedem der Gleichspannungswandler (14) mit den Außenanschlüssen (17a, 17b) der Reihenschaltung gekoppelt ist,
- eine Steuervorrichtung (13) zur Überwachung von Parametern der Lithium-Ionen-Speichermodule (11a-11d) und zur Steuerung der Schaltvorrichtungen (211, 212, 213) und der Gleichspannungswandler (241, 242, 243), wobei für ein Zwischenspeichern von Ladung für den Ladungsausgleich zwischen den Lithium-Ionen-Speichermodulen die Gesamtheit der in Reihe geschalteten Lithium-Ionen-Speichermodule der Energiespeicheranordnung vorgesehen ist, wobei die Steuervorrichtung (13) den Ladevorgang und/oder Entladevorgang der Energiespeicheranordnung basierend auf Speicherkapazitätswerten der jeweiligen Lithium-Ionen-Speichermodule (11a, 11b, 11c, 11d) steuert,
wobei ein positiver Anschluss von jedem der Lithium-Ionen-Speichermodule mit dem positiven Anschluss der ersten Seite eines jeden der Gleichspannungswandler über jeweils einen, dem jeweiligen Lithium-Ionen-Speichermodul zugeordneten ersten Schalter dieser entsprechenden Schaltvorrichtung koppelbar ist und ein negativer Anschluss von jedem der Lithium-Ionen-Speichermodule mit dem negativen Anschluss der ersten Seite dieses einen Gleichspannungswandlers über jeweils einen, dem jeweiligen Lithium-Ionen-Speichermodul zugeordneten zweiten Schalter dieser entsprechenden Schaltvorrichtung koppelbar ist.

2. Vorrichtung zum Ladungsausgleich nach Anspruch 1, wobei das Lithium-Ionen-Speichermodul (11a, 11b, 11c, 11d) mit der geringsten Speicherkapazität in Abhängigkeit der Speicherkapazität der anderen Lithium-Ionen-Speichermodule (11a, 11b, 11c, 11d) geladen oder entladen wird.

3. Vorrichtung zum Ladungsausgleich nach Anspruch 1 oder 2, wobei das Lithium-Ionen-Speichermodul (11a, 11b, 11c, 11d), welches beim Ladevorgang der Energiespeicheranordnung, als erstes einen Ladezustand über einem vorbestimmten Speicherkapazitätswert überschreitet, über die entsprechende Schaltvorrichtung mit einem der Gleichspannungswandler (241, 242, 243) verbunden wird, um diesem Lithium-Ionen-Speichermodul (11a, 11b, 11c, 11d) Ladung zu entnehmen und die entnommene Ladung an den Außenanschlüssen der Reihenschaltung der Lithium-Ionen-Speichermodule (11a, 11b, 11c, 11d) wieder zuzuführen.

4. Vorrichtung zum Ladungsausgleich nach Anspruch 1 oder 2, wobei das Lithium-Ionen-Speichermodul (11a, 11b, 11c, 11d), welches beim Entladevorgang der Energiespeicheranordnung (11), als erstes einen Ladezustand unter einer vorbestimmten Speicherkapazität erreicht, über die entsprechende Schaltvorrichtung mit einer ersten Seite eines der Gleichspannungswandler (241, 242, 243)verbunden wird, wobei eine zweite Seite dieses einen Gleichspannungswandlers mit den Außenanschlüssen (17a, 17b) der Reihenschaltung der Lithium-Ionen-Speichermodule (11a, 11b, 11c, 11d) verbunden ist, um der Energiespeicheranordnung (11) über diese Außenanschlüsse (17a, 17b) eine Ladung zu entnehmen, wobei diese Ladung dem Lithium-Ionen-Speichermodul mit dem unterschrittenen Ladezustand über diesen einen Gleichspannungswandler und die entsprechende Schaltvorrichtung zugeführt wird.

5. Vorrichtung zum Ladungsausgleich nach einem der vorherigen Ansprüche, wobei das Lithium-Ionen-Speichermodul (11a, 11b, 11c, 11d), welches beim Ladevorgang der Energiespeicheranordnung (11) als erstes seine Ladeschlussspannung oder einen vorbestimmten Spannungswert erreicht, über die entsprechende Schaltvorrichtung mit einem der Gleichspannungswandler (241, 242, 243) verbunden wird, um diesem Lithium-Ionen-Speichermodul (11a, 11b, 11c, 11d) Ladung zu entnehmen und die entnommene Ladung der Reihenschaltung der Lithiumlonen-Speichermodule (11a, 11b, 11c, 11d) wieder zuzuführen.

6. Vorrichtung zum Ladungsausgleich nach einem der vorherigen Ansprüche, wobei das Lithium-Ionen-Speichermodul (11a, 11b, 11c, 11d), welches beim Entladevorgang der Energiespeicheranordnung (11) als erstes seine Entladeschlussspannung oder einen vorbestimmten Spannungswert erreicht, über die entsprechende Schaltvorrichtung mit einem der Gleichspannungswandler (241, 242, 243) verbunden wird, um diesem Lithium-Ionen-Speichermodul (11a, 11b, 11c, 11d) eine Ladung zu zuführen, wobei die zugeführte Ladung über die Außenschlüsse (17a, 17b) der Reihenschaltung der Lithium-Ionen-Speichermodule (11a, 11b, 11c, 11d) entnommen wurde.

7. Vorrichtung zum Ladungsausgleich nach einem der vorhergehenden Ansprüche, wobei die Speicherkapazitätswerte der Lithium-Ionen-Speichennodule (11a, 11b, 11c, 11d) basierend auf Spannungswerten und einem Stromwert pro Zeiteinheit bestimmt und in einer Speichereinheit gespeichert werden.

8. Vorrichtung zum Ladungsausgleich nach einem der vorhergehenden Ansprüche, wobei die Steuervorrichtung (13) die jeweiligen Spannungen über den einzelnen Lithium-lonen-Speichermodulen (11a, 11b, 11c, 11d) und den Stromfluss in der Reihenschaltung der Lithium-Ionen-Speichermodule erfasst.

9. Vorrichtung zum Ladungsausgleich nach einem der vorhergehenden Ansprüche, wobei die Gleichspannungswandler (241, 242, 243) jeweils eine galvanische Trennung zwischen der ersten und der zweiten Seite aufweisen.

10. Vorrichtung zum Ladungsausgleich nach einem der vorhergehenden Ansprüche, wobei die Steuereinrichtung (13) wenigstens für eine der folgenden Funktionen vorgesehen ist:
- Steuerung der Schalter in den Schaltvorrichtungen (211, 212, 213);
- Empfang von Signalen zur Strom- und Spannungsmessung;
- Steuerung der Gleichspannungswandler (241, 242, 243);
- Empfang von externen Steuersignalen;
- Ausgabe von Daten an externe Geräte;
- Speicherung von Parametern und Kapazitätswerten der Lithium-Ionen-Speichermodule.

11. Vorrichtung zum Ladungsausgleich nach einem der vorhergehenden Ansprüche, wobei beim Entladevorgang das Lithium-Ionen-Speichermodul (11a, 11b, 11c, 11d) mit der geringsten Speicherkapazität bis auf eine Restkapazität wenigstens eines Lithium-Ionen-Speichermoduls mit höherer Speicherkapazität aufgeladen wird.

12. Vorrichtung zum Ladungsausgleich nach einem der vorhergehenden Ansprüche, wobei die Speicherkapazität eines Lithium-Ionen-Speichermoduls (11a, 11b, 11c, 11d) basierend auf Ladeströmen und Ladezeiten von vorangegangenen Ladezyklen bestimmt wird.

13. Verfahren zum Ladungsausgleich von Lithium-Ionen-Speichermodulen mittels Vorrichtung zum Ladungsausgleich nach Anspruch 1, das Verfahren umfasst die Schritte:
- Messen (S210, S310, S410, S510) von Parametern der Lithium-Ionen-Speichermodule (11a-11d) und Vergleichen (S220, S310, S420, S510) mit vorbestimmten Parametern;
- Erfassen von Speicherkapazitätswerten der Lithium-Ionen-Speichermodule (11a-11d);
- Ausgleichen (S260, S340, S460, S540) von Ladungszuständen zwischen den Lithium-Ionen-Speichermodulen (11a-11d) durch Verwenden der Gesamtheit der Lithium-Ionen-Speichermodule als Zwischenspeicher basierend auf den erfassten Speicherkapazitätswerten,
wobei ein Ladevorgang der Energiespeicheranordnung (11) die Schritte umfasst:
- bei Überschreiten (S430, S510) eines vorbestimmten Parameters in einem Lithium-Ionen-Speichermodul,
- Koppeln (S440, S450, S520, S530) dieses Lithium-Ionen-Speichermoduls mit dem überschrittenen Parameter mit einem der Gleichspannungswandler (241, 242, 243) und wenigstens teilweises Entladen (S460, S540) dieses Lithium-Ionen-Speichermoduls,
- Zuführen der entnommenen Ladung zu der gesamten Reihenschaltung der Lithium-Ionen-Speichermodule (11a-11d),
wobei das Koppeln ein Koppeln eines positiven Anschlusses des Lithium-Ionen-Speichermoduls mit dem positiven Anschluss der ersten Seite dieses einen Gleichspannungswandlers über einen ersten Schalter einer entsprechenden, diesem einen Gleichspannungswandler zugeordneten Schaltvorrichtung der mehreren Schaltvorrichtungen (211, 212, 213) und ein Koppeln eines negativen Anschlusses des Lithium-Ionen-Speichermoduls mit dem negativen Anschluss der ersten Seite dieses einen Gleichspannungswandlers über einen zweiten Schalter dieser entsprechenden Schaltvorrichtung umfasst.

14. Verfahren zum Ladungsausgleich von Lithium-Ionen-Speichermodulen mittels Vorrichtung zum Ladungsausgleich nach Anspruch 1, das Verfahren umfasst die Schritte:
- Messen (S210, S310, S410, S510) von Parametern der Lithium-Ionen-Speichermodule (11a-11d) und Vergleichen (S220, S310, S420, S510) mit vorbestimmten Parametern;
- Erfassen von Speicherkapazitätswerten der Lithium-Ionen-Speichermodule (11a-11d);
- Ausgleichen (S260, S340, S460, S540) von Ladungszuständen zwischen den Lithium-Ionen-Speichermodulen (11a-11d) durch Verwenden der Gesamtheit der Lithium-Ionen-Speichermodule als Zwischenspeicher basierend auf den erfassten Speicherkapazitätswerten,
wobei ein Entladevorgang der Energiespeicheranordnung (11) die Schritte umfasst:
- bei Unterschreiten (S230, S310) eines vorbestimmten Parameters in einem Lithium-Ionen-Speichermodul (11a-11d),
- Koppeln (S240, S250; S320, S330) dieses Lithium-Ionen-Speichermoduls mit dem unterschrittenen Parameter mit einem der Gleichspannungswandler (241, 242, 243) und Zuführen (S460, S540) von Ladung zu diesem Speichermodul mit dem unterschrittenen Parameter, wobei die zugeführte Ladung an den Außenschlüssen (17a, 17b) der Reihenschaltung entnommen wird,
wobei das Koppeln ein Koppeln eines positiven Anschlusses des Lithium-Ionen-Speichermoduls mit dem positiven Anschluss der ersten Seite dieses einen Gleichspannungswandlers (241, 242, 243) über einen ersten Schalter einer entsprechenden, diesem einen Gleichspannungswandler zugeordneten Schaltvorrichtung der mehreren Schaltvorrichtungen (211, 212, 213) und ein Koppeln eines negativen Anschlusses des Lithium-Ionen-Speichermoduls mit dem negativen Anschluss der ersten Seite dieses einen Gleichspannungswandlers über einen zweiten Schalter dieser entsprechenden Schaltvorrichtung umfasst.

## Claims

1. Energy storage device for charge equalisation of an energy storage arrangement (11), said energy storage arrangement (11) comprising at least two lithium-ion storage modules (11a-11d) that are electrically connected in series,
**characterized in that** the device for charge equalisation comprises:
- a plurality of switching devices (211, 212, 213), each of which is coupled to the lithium-ion storage modules (11a-11d) of the energy storage arrangement,
- a plurality of DC-DC voltage converters (241, 242, 243), each of which comprises a first side with a positive terminal and a negative terminal and a second side with a positive terminal and a negative terminal, wherein the first side of each of the DC-DC voltage converters (14) can be coupled to each of the lithium-ions storage modules (11a-11d) via a corresponding switching device of the plurality of switching devices (211, 212, 213) that is associated with the respective DC-DC voltage converter, and the second side of each of the DC-DC voltage converters (14) is coupled to the external terminals (17a, 17b) of the series circuit,
- a control device (13) for monitoring parameters of the lithium-ion storage modules (11a-11d) and for controlling the switching devices (211, 212, 213) and the DC-DC voltage converters (241, 242, 243), wherein the entirety of the series-connected lithium-ion storage modules of the energy storage arrangement is provided for intermediate storage of charge for the charge equalisation between the lithium-ion storage modules, the control device (13) controlling the charging process and/or discharging process of the energy storage arrangement based on storage capacity values of the respective lithium-ion storage modules (11a, 11b, 11c, 11d),
wherein a positive terminal of each of the lithium-ion storage modules can be coupled to the positive terminal of the first side of each of the DC-DC voltage converters in each case via a first switch, associated with the respective lithium-ion storage module, of this corresponding switching device, and a negative terminal of each of the lithium-ion storage modules can be coupled to the negative terminal of the first side of this same DC-DC voltage converter in each case via a second switch, associated with the respective lithium-ion storage module, of the corresponding switching device.

2. Device for charge equalisation according to Claim 1, wherein the lithium-ion storage module (11a, 11b, 11c, 11d) with the lowest storage capacity in relation to the storage capacity of the other lithium-ion storage modules (11a, 11b, 11c, 11d) is charged or discharged.

3. Device for charge equalisation according to Claim 1 or 2, wherein the lithium-ion storage module (11a, 11b, 11c, 11d), which during the charging process of the energy storage arrangement is the first to exceed a charge state above a predetermined storage capacity value, is connected via the corresponding switching device to one of the DC-DC voltage converters (241, 242, 243), in order to extract charge from this lithium-ion storage module (11a, 11b, 11c, 11d) and to feed the extracted charge back to the external terminals of the series circuit of the lithium-ion storage modules (11a, 11b, 11c, 11d).

4. Device for charge equalisation according to Claim 1 or 2, wherein the lithium-ion storage module (11a, 11b, 11c, 11d), which during the discharging process of the energy storage arrangement (11) is the first to reach a charge state below a predetermined storage capacity, is connected via the corresponding switching device to a first side of one of the DC-DC voltage converters (241, 242, 243), wherein a second side of this same DC voltage converter is connected to the external terminals (17a, 17b) of the series circuit of the lithium-ion storage modules (11a, 11b, 11c, 11d) in order to extract charge from the energy storage arrangement (11) via these external terminals (17a, 17b), this charge being fed to the lithium-ion storage module with the undershot charge state via this same DC-DC voltage converter and the corresponding switching device.

5. Device for charge equalisation according to any one of the preceding claims, wherein the lithium-ion storage module (11a, 11b, 11c, 11d), which during the charging process of the energy storage arrangement (11) is the first to reach its final charge voltage or a predetermined voltage value, is connected via the corresponding switching device to one of the DC-DC voltage converters (241, 242, 243) in order to extract charge from this lithium-ion storage module (11a, 11b, 11c, 11d) and to feed the extracted charge back to the external terminals of the series circuit of the lithium-ion storage modules (11a, 11b, 11c, 11d).

6. Device for charge equalisation according to any one of the preceding claims, wherein the lithium-ion storage module (11a, 11b, 11c, 11d), which during the discharging process of the energy storage arrangement (11) is the first to reach its final discharge voltage or a predetermined voltage value, is connected via the corresponding switching device to one of the DC-DC voltage converters (241, 242, 243) in order to supply a charge to this lithium-ion storage module (11a, 11b, 11c, 11d), wherein the charge supplied was extracted via the external terminals (17a, 17b) of the series circuit of the lithium-ion storage modules (11a, 11b, 11c, 11d).

7. Device for charge equalisation according to any one of the preceding claims, wherein the storage capacity values of the lithium-ion storage modules (11a, 11b, 11c, 11d) are determined based on voltage values and a current value per unit time and are stored in a storage unit.

8. Device for charge equalisation according to any one of the preceding claims, wherein the control device (13) detects the respective voltages via the individual lithium-ion storage modules (11a, 11b, 11c, 11d) and the current flow in the series circuit of the lithium-ion storage modules.

9. Device for charge equalisation according to any one of the preceding claims, wherein the DC-DC voltage converters (241, 242, 243) each have a galvanic isolation between the first and the second side.

10. Device for charge equalisation according to any one of the preceding claims, wherein the control device (13) is provided for at least one of the following functions:
- controlling the switches in the switching devices (211, 212, 213);
- receiving signals for current and voltage measurement;
- controlling the DC-DC voltage converters (241, 242, 243);
- receiving external control signals;
- outputting data to external devices;
- storing parameters and capacity values of the lithium-ion storage modules.

11. Device for charge equalisation according to any one of the preceding claims, wherein during the discharging process the lithium-ion storage module (11a, 11b, 11c, 11d) with the lowest storage capacity is recharged, leaving a residual capacity of at least one lithium-ion storage module with a higher storage capacity.

12. Device for charge equalisation according to any one of the preceding claims, wherein the storage capacity of a lithium-ion storage module (11a, 11b, 11c, 11d) is determined based on charging currents and charging times of previous charge cycles.

13. Method for charge equalisation of lithium-ion storage modules by means of the device for charge equalisation according to Claim 1,
the method comprising the steps:
- measuring (S210, S310, S410, S510) parameters of the lithium-ion storage modules (11a-11d) and comparing (S220, S310, S420, S510) them with predetermined parameters;
- detecting storage capacity values of the lithium-ion storage modules (11a-11d);
- equalising (S260, S340, S460, S540) charge states between the lithium-ion storage modules (11a-11d) by the use of the entirety of the lithium-ion storage modules as temporary storage based on the detected storage capacity values,
wherein a charging process of the energy storage arrangement (11) comprises the steps:
- when a predetermined parameter in a lithium-ion storage module is exceeded (S430, S510),
- coupling (S440, S450, S520, S530) this lithium-ion storage module with the exceeded parameter to one of the DC-DC voltage converters (241, 242, 243) and at least partially discharging (S460, S540) this lithium-ion storage module,
- feeding the extracted charge to the entire series circuit of the lithium-ion storage modules (11a-11d),
wherein the coupling comprises a coupling of a positive terminal of the lithium-ion storage module to the positive terminal of the first side of this same DC-DC voltage converter via a first switch of a corresponding switching device, associated to this same DC-DC voltage converter, of the plurality of switching devices (211, 212, 213), and a coupling of a negative terminal of the lithium-ion storage module to the negative terminal of the first side of this same DC-DC voltage converter via a second switch of this corresponding switching device.

14. Method for charge equalisation of lithium-ion storage modules by means of a device for charge equalisation according to Claim 1,
the method comprising the steps:
- measuring (S210, S310, S410, S510) parameters of the lithium-ion storage modules (11a-11d) and comparing (S220, S310, S420, S510) them with predetermined parameters;
- detecting storage capacity values of the lithium-ion storage modules (11a-11d);
- equalising (S260, S340, S460, S540) charge states between the lithium-ion storage modules (11a-11d) by the use of the entirety of the lithium-ion storage modules as temporary storage based on the detected storage capacity values, a discharging process of the energy storage arrangement (11) comprising the steps:
- when a predetermined parameter in a lithium-ion storage module (11a-11d) is undershot (S230, S310),
- coupling (S240, S250, S320, S530) this lithium-ion storage module with the undershot parameter to one of the DC-DC voltage converters (241, 242, 243) and feeding (S460, S540) charge to this storage module with the undershot parameter, the supplied charge being extracted at the external terminals (17a, 17b) of the series circuit,
wherein the coupling comprises a coupling of a positive terminal of the lithium-ion storage module to the positive terminal of the first side of this same DC-DC voltage converter (241, 242, 243) via a first switch of a corresponding switching device, associated to this same DC-DC voltage converter, of the plurality of switching devices (211, 212, 213), and a coupling of a negative terminal of the lithium-ion storage module to the negative terminal of the first side of this same DC-DC voltage converter via a second switch of this corresponding switching device.

## Revendications

1. Dispositif pour équilibrer la charge d'un ensemble d'accumulation d'énergie (11), dans lequel l'ensemble d'accumulation d'énergie (11) comprend au moins deux modules d'accumulation au ions de lithium (11a-11d) qui sont connectés électriquement en série, **caractérisé en ce que** le dispositif pour équilibrer la charge comprend :
- plusieurs dispositifs de commutation (211, 212, 213) qui sont respectivement couplés avec les modules d'accumulation au ions de lithium (11a-11d) de l'ensemble d'accumulation d'énergie,
- plusieurs convertisseurs continu-continu (241, 242, 243) qui comprennent respectivement un premier côté avec une borne positive et une borne négative et un deuxième côté avec une borne positive et une borne négative, dans lequel le premier côté de chacun des convertisseurs continu-continu (14) peut être couplé, via un dispositif de commutation correspondant associé au convertisseur continu-continu respectif des plusieurs dispositifs de commutation (211, 212, 213), avec chacun des modules d'accumulation au ions de lithium (11a-11d), et le deuxième côté de chacun des convertisseurs continu-continu (14) est couplé avec les bornes extérieures (17a, 17b) de la connexion série,
- un dispositif de commande (13) pour surveiller des paramètres des modules d'accumulation au ions de lithium (11a-11d) et pour commander les dispositifs de commutation (211, 212, 213) et les convertisseurs continu-continu (241, 242, 243), dans lequel, pour une accumulation intermédiaire de charge pour équilibrer la charge entre les modules d'accumulation au ions de lithium, on prévoit l'ensemble des modules d'accumulation au ions de lithium connectés en série de l'ensemble d'accumulation d'énergie, dans lequel le dispositif de commande (13) assure la commande du processus de charge et/ou du processus de décharge de l'ensemble d'accumulation d'énergie sur la base de valeurs de capacité d'accumulation des modules d'accumulation au ions de lithium (11a, 11b, 11c, 11d) respectifs,
dans lequel une borne positive de chacun des modules d'accumulation au ions de lithium peut être couplée avec la borne positive du premier côté de chacun des convertisseurs continu-continu via respectivement un premier commutateur, associé au module d'accumulation au ions de lithium respectif, de ce dispositif de commutation correspondant, et une borne négative de chacun des modules d'accumulation au ions de lithium peut être couplée avec la borne négative du premier côté de ce convertisseur continu-continu via respectivement un deuxième commutateur associé au module d'accumulation au ions de lithium respectif de ce dispositif de commutation correspondant.

2. Dispositif pour équilibrer la charge selon la revendication 1, dans lequel le module d'accumulation au ions de lithium (11a, 11b, 11c, 11d) avec la capacité d'accumulation la plus faible est chargé ou déchargé en fonction de la capacité d'accumulation des autres modules d'accumulation au ions de lithium (11a, 11b, 11c, 11d).

3. Dispositif pour équilibrer la charge selon la revendication 1 ou 2, dans lequel le module d'accumulation au ions de lithium (11a, 11b, 11c, 11d), lequel, lors du processus de charge de l'ensemble d'accumulation d'énergie, dépasse en premier par le haut un état de charge au-dessus d'une valeur de capacité de charge prédéterminée, est relié via le dispositif de commutation correspondant à l'un des convertisseurs continu-continu (241, 242, 243) pour prélever de la charge de ce module d'accumulation au ions de lithium (11a, 11b, 11c, 11d) et de nouveau amener la charge prélevée aux bornes extérieures de la connexion série des modules d'accumulation au ions de lithium (11a, 11b, 11c, 11d).

4. Dispositif pour équilibrer la charge selon la revendication 1 ou 2, dans lequel le module d'accumulation au ions de lithium (11a, 11b, 11c, 11d), lequel, lors du processus de décharge de l'ensemble d'accumulation d'énergie (11), atteint en premier un état de charge en-dessous d'une capacité de charge prédéterminée, est relié via le dispositif de commutation correspondant à un premier côté de l'un des convertisseurs continu-continu (241, 242, 243), dans lequel un deuxième côté de ce convertisseur continu-continu est relié aux bornes extérieures (17a, 17b) de la connexion série des modules d'accumulation au ions de lithium (11a, 11b, 11c, 11d) pour prélever une charge de l'ensemble d'accumulation d'énergie (11) via ces bornes extérieures (17a, 17b), dans lequel cette charge est amenée au module d'accumulation au ions de lithium avec l'état de charge dépassé par le bas via ce convertisseur continu-continu et le dispositif de commutation correspondant.

5. Dispositif pour équilibrer la charge selon l'une des revendications précédentes, dans lequel le module d'accumulation au ions de lithium (11a, 11b, 11c, 11d), lequel, lors du processus de charge de l'ensemble d'accumulation d'énergie (11), atteint en premier sa tension de fin de charge ou une valeur de tension prédéterminée, est relié via le dispositif de commutation correspondant à l'un des convertisseurs continu-continu (241, 242, 243) pour prélever une charge de ce module d'accumulation au ions de lithium (11a, 11b, 11c, 11d) et pour de nouveau amener la charge prélevée à la connexion série des modules d'accumulation au ions de lithium (11a, 11b, 11c, 11d) .

6. Dispositif pour équilibrer la charge selon l'une des revendications précédentes, dans lequel le module d'accumulation au ions de lithium (11a, 11b, 11c, 11d), lequel, lors du processus de décharge de l'ensemble d'accumulation d'énergie (11), atteint en premier sa tension de fin de décharge ou une valeur de tension prédéterminée, est relié via le dispositif de commutation correspondant à l'un des convertisseurs de tension continu-continu (241, 242, 243) pour amener une charge à ce module d'accumulation au ions de lithium (11a, 11b, 11c, 11d), dans lequel la charge amenée a été prélevée via les bornes extérieures (17a, 17b) de la connexion série des modules d'accumulation au ions de lithium (11a, 11b, 11c, 11d).

7. Dispositif pour équilibrer la charge selon l'une des revendications précédentes, dans lequel les valeurs de capacité d'accumulation des modules d'accumulation au ions de lithium (11a, 11b, 11c, 11d) sont déterminées sur la base de valeurs de tension et d'une valeur de courant par unité de temps et sont stockées dans une unité de mémoire.

8. Dispositif pour équilibrer la charge selon l'une des revendications précédentes, dans lequel le dispositif de commande (13) détecte les tensions respectives sur les modules d'accumulation au ions de lithium (11a, 11b, 11c, 11d) individuels et la circulation de courant dans la connexion série des modules d'accumulation au ions de lithium.

9. Dispositif pour équilibrer la charge selon l'une des revendications précédentes, dans lequel les convertisseurs continu-continu (241, 242, 243) présentent respectivement une séparation galvanique entre le premier et le deuxième côté.

10. Dispositif pour équilibrer la charge selon l'une des revendications précédentes, dans lequel le dispositif de commande (13) est prévu pour au moins l'une des fonctions suivantes :
- la commande des commutateurs dans les dispositifs de commutation (211, 212, 213) ;
- la réception de signaux pour la mesure du courant et de la tension ;
- la commande des convertisseurs continu-continu (241, 242, 243) ;
- la réception de signaux de commande externes ;
- la sortie de données à l'attention d'appareils externes ;
- le stockage de paramètres et valeurs de capacité des modules d'accumulation au ions de lithium.

11. Dispositif pour équilibrer la charge selon l'une des revendications précédentes, dans lequel, lors du processus de décharge, le module d'accumulation au ions de lithium (11a, 11b, 11c, 11d) avec la capacité de charge la plus faible est rechargé jusqu'à une capacité résiduelle d'au moins un module d'accumulation au ions de lithium à capacité de charge plus élevée.

12. Dispositif pour équilibrer la charge selon l'une des revendications précédentes, dans lequel la capacité de charge d'un module d'accumulation au ions de lithium (11a, 11b, 11c, 11d) est déterminée sur la base de courants de charge et de temps de charge de cycles de charge antérieurs.

13. Procédé pour équilibrer la charge de modules d'accumulation au ions de lithium au moyen d'un dispositif pour équilibrer la charge selon la revendication 1,
le procédé comprenant les étapes suivantes :
- la mesure (S210, S310, S410, S510) de paramètres des modules d'accumulation au ions de lithium (11a-11d) et la comparaison (S220, S310, S420, S510) avec des paramètres prédéterminés ;
- la détection de valeurs de capacité d'accumulation des modules d'accumulation au ions de lithium (11a-11d) ;
- l'équilibrage (S260, S340, S460, S540) d'états de charge entre les modules d'accumulation au ions de lithium (11a-11d) par utilisation de l'ensemble des modules d'accumulation au ions de lithium en tant qu'accumulateur intermédiaire sur la base des valeurs de capacité d'accumulation détectées, dans lequel un processus de charge de l'ensemble d'accumulation d'énergie (11) comprend les étapes suivantes :
- en cas de dépassement par le haut (S430, S510) d'un paramètre prédéterminé dans un module d'accumulation au ions de lithium,
- le couplage (S440, S450, S530) de ce module d'accumulation au ions de lithium avec le paramètre dépassé par le haut avec l'un des convertisseurs continu-continu (241, 242, 243) et la décharge au moins partielle (S460, S540) de ce module d'accumulation au ions de lithium,
- l'amenée de la charge prélevée à l'ensemble de la connexion série des modules d'accumulation au ions de lithium (11a-11d),
dans lequel le couplage comprend un couplage d'une borne positive du module d'accumulation au ions de lithium avec la borne positive du premier côté de ce convertisseur continu-continu via un premier commutateur d'un dispositif de commutation correspondant, associé à ce convertisseur continu-continu, des plusieurs dispositifs de commutation (211, 212, 213) et un couplage d'une borne négative du module d'accumulation au ions de lithium avec la borne négative du premier côté de ce convertisseur continu-continu via un deuxième commutateur de ce dispositif de commutation correspondant.

14. Procédé pour équilibrer la charge de modules d'accumulation au ions de lithium au moyen d'un dispositif pour équilibrer la charge selon la revendication 1,
le procédé comprenant les étapes suivantes :
- la mesure (S210, S310, S410, S510) de paramètres des modules d'accumulation au ions de lithium (11a-11d) et la comparaison (S220, S310, S420, S510) avec des paramètres prédéterminés ;
- la détection de valeurs de capacité d'accumulation des modules d'accumulation au ions de lithium (11a-11d) ;
- l'équilibrage (S260, S340, S460, S540) d'états de charge entre les modules d'accumulation au ions de lithium (11a-11d) par utilisation de l'ensemble des modules d'accumulation au ions de lithium en tant qu'accumulateur intermédiaire sur la base des valeurs de capacité d'accumulation détectées, dans lequel un processus de décharge de l'ensemble d'accumulation d'énergie (11) comprend les étapes suivantes :
- en cas de dépassement par le bas (S230, S310) d'un paramètre prédéterminé dans un module d'accumulation au ions de lithium (11a-11d),
- le couplage (S240, S250 ; S320, S330) de ce module d'accumulation au ions de lithium avec le paramètre dépassé par le bas avec l'un des convertisseurs continu-continu (241, 242, 243) et l'amenée (S460, S540) d'une charge à ce module d'accumulation avec le paramètre dépassé par le bas, dans lequel la charge amenée est prélevée aux bornes extérieures (17a, 17b) de la connexion série,
dans lequel le couplage comprend un couplage d'une borne positive du module d'accumulation au ions de lithium avec la borne positive du premier côté de ce convertisseur continu-continu (241, 242, 243) via un premier commutateur d'un dispositif de commutation correspondant, associé à ce convertisseur continu-continu, des plusieurs dispositifs de commutation (211, 212, 213) et un couplage d'une borne négative du module d'accumulation au ions de lithium avec la borne négative du premier côté de ce convertisseur continu-continu via un deuxième commutateur de ce dispositif de commutation correspondant.
